(19) **Europäisches Patentamt / European Patent Office / Office européen des brevets**

(11) **EP 3 441 972 A1**

(12) **EUROPEAN PATENT APPLICATION**
published in accordance with Art. 153(4) EPC

(43) Date of publication:
**13.02.2019 Bulletin 2019/07**

(21) Application number: **16899747.6**

(22) Date of filing: **26.04.2016**

(51) Int Cl.:
***G11B 27/10*** *(2006.01)*

(86) International application number:
**PCT/CN2016/080234**

(87) International publication number:
**WO 2017/185233 (02.11.2017 Gazette 2017/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Huawei Technologies Co., Ltd.
Longgang District
Shenzhen, Guangdong 518129 (CN)**

(72) Inventors:
• **LI, Chen
  Shenzhen
  Guangdong 518129 (CN)**

• **YANG, Yanchang
  Shenzhen
  Guangdong 518129 (CN)**
• **WANG, Hao
  Shenzhen
  Guangdong 518129 (CN)**
• **HUANG, Zhiquan
  Shenzhen
  Guangdong 518129 (CN)**
• **YU, Heng
  Shenzhen
  Guangdong 518129 (CN)**

(74) Representative: **Gill Jennings & Every LLP
The Broadgate Tower
20 Primrose Street
London EC2A 2ES (GB)**

(54) **METHOD FOR CONTROLLING PLAYBACK OF AUDIO FILE AND AUDIO PLAYBACK APPARATUS**

(57)     Embodiments of the present invention disclose an audio file play control method, including: obtaining, by an audio play apparatus, identification information corresponding to an audio file; determining, by the audio play apparatus, a play probability of the audio file according to the identification information corresponding to the audio file; and playing, by the audio play apparatus, the audio file according to the play probability of the audio file. The embodiments of the present invention further provide an audio play apparatus. In the embodiments of the present invention, in a random play mode, a quantity of play times of the audio file is determined according to the identification information corresponding to the audio file, that is, according to a degree to which a user likes the audio file, with no need to play multiple audio files at an equal probability. This improves user experience and increases solution flexibility.

```
┌─────────────────────────────────────────────┐
│ An audio play apparatus obtains identification│ ── 101
│ information corresponding to an audio file    │
└─────────────────────────────────────────────┘
                     │
                     ▼
┌─────────────────────────────────────────────┐
│ The audio play apparatus determines a play    │ ── 102
│ probability of the audio file according to the│
│ identification information corresponding to the│
│ audio file                                     │
└─────────────────────────────────────────────┘
                     │
                     ▼
┌─────────────────────────────────────────────┐
│ The audio play apparatus plays the audio file │ ── 103
│ according to the play probability of the audio │
│ file                                           │
└─────────────────────────────────────────────┘
```

FIG. 1

## Description

## TECHNICAL FIELD

The present invention relates to the audio play field, and in particular, to an audio file play control method and an audio play apparatus.

## BACKGROUND

Music has gradually entered daily life of every person. In a random play mode of an existing music player, each song has a same probability of being played. However, when sometimes a user wants to listen to a song liked by the user, if a next song is played, there is a quite high probability that many songs need to be played to the user before the user can listen to the song liked by the user.

In the prior art, all music players have a label setting function. A user labels a song liked by the user. During play, the user may select a labeled-song list for play.

However, in a random play mode, even if a song list is set, a probability of playing a song still remains unchanged. That is, when the labeled-song list includes multiple songs, if a user wants one favorite song to be played, there is still a quite high probability that many songs need to be played to switch to the favorite song of the user. This increases a switch time and reduces user experience.

## SUMMARY

Embodiments of the present invention provide an audio file play control method and an audio play apparatus, so as to determine a quantity of play times of an audio file in a random play mode according to identification information corresponding to the audio file, that is, according to a degree to which a user likes the audio file, with no need to play multiple audio files at an equal probability. This improves user experience and increases solution flexibility.

In view of this, a first aspect of the embodiments of the present invention provides an audio file play control method, including:

first obtaining, by an audio play apparatus in a random play mode, identification information corresponding to an audio file, where this step may be specifically implemented by directly obtaining identification information with which a user labels the audio file last time or even earlier;

determining, by the audio play apparatus, a play probability of the audio file according to the identification information corresponding to the audio file, where the identification information corresponding to the audio file includes information used to calculate the play probability of the audio file, so that the audio play apparatus can determine, according to different identification information, play probabilities corresponding to different audio files; and

determining, by the audio play apparatus, a play probability of each audio file according to identification information corresponding to the audio file, and playing a corresponding audio file according to the play probability of each audio file.

In this embodiment of the present invention, the audio file play control method is provided. The audio play apparatus obtains the identification information corresponding to the audio file, determines the play probability of the audio file according to the identification information corresponding to the audio file, and finally plays the audio file according to the play probability of the audio file. In this way, a quantity of play times of the audio file is determined in a random play mode according to the identification information corresponding to the audio file, that is, according to a degree to which the user likes the audio file, with no need to play multiple audio files at an equal probability. This improves user experience and increases solution flexibility.

With reference to the first aspect of the embodiments of the present invention, in a first implementation of the first aspect of the embodiments of the present invention, a play mode of the audio play apparatus is the random play mode, that is, the play probability of the audio file is determined in the random play mode, and a different play probability is obtained according to different identification information.

Moreover, in this embodiment of the present invention, the play mode of the audio play apparatus is limited to the random play mode. In the prior art, each audio file has a same play probability when the random play mode is used. However, in the present invention, the quantity of play times of the audio file can be determined in the random play mode according to the identification information corresponding to the audio file. Therefore, user experience is further improved, and solution flexibility is increased.

With reference to the first possible implementation of the first aspect of the embodiments of the present invention, in a second implementation of the first aspect of the embodiments of the present invention, the identification information used to determine the play probability of the audio file includes an identifier value and a quantity of identifiers, and specific identification information may be represented as user preference information in actual application.

Moreover, in this embodiment of the present invention, the identification information includes the identifier value and the quantity of identifiers, and is specifically represented as the user preference information. The audio play apparatus receives the user preference information of the user for the audio file, and plays, according to the user preference information, a play probability prompt tone corresponding to the audio file. According to the foregoing solution, the identifier value and the quantity of identifiers included in the identification information may be determined, so that the audio play apparatus can determine the play probability of the audio file according to the identifier value and the quantity of identifiers. Meanwhile, if the play probability prompt tone corresponding to the audio file can also be played, the user can learn the probability of the audio file, with no need to view a music player interface. This improves practicality and flexibility of the solution when it is inconvenient for the user to view the music player interface, and the user can conveniently adjust the probability of the current music file in real time, thereby enhancing user experience of the solution.

With reference to any one of the first aspect of the embodiments of the present invention, or the first or the second possible implementation of the first aspect of the embodiments of the present invention, in a third implementation of the first aspect of the embodiments of the present invention, the determining, by the audio play apparatus, a play probability of the audio file according to the identification information corresponding to the audio file may include:

playing, by the music play apparatus, a to-be-played audio file set constituted by at least one audio file, where the to-be-played audio file set may be a playlist, the user integrates the playlist according to preference of the user, and there may be multiple playlists;
determining, by the audio play apparatus, an average play probability of the audio file according to a total quantity of identifiers in the to-be-played audio file set, where the average play probability = 1/the total quantity of identifiers in the to-be-played audio file set; and
determining, by the audio play apparatus according to the quantity of identifiers of the audio file and the average play probability, the play probability corresponding to the audio file, and randomly selecting the audio file in the to-be-played audio file set, to play the audio file.

Further, in this embodiment of the present invention, the audio play apparatus determines a quantity of audio files in the to-be-played audio file set. The to-be-played audio file set is constituted by at least one audio file. Then, the audio play apparatus determines the average play probability of the audio file according to the total quantity of identifiers in the to-be-played audio file set, and finally determines the play probability of the audio file in the to-be-played audio file set according to the quantity of identifiers of the audio file and the average play probability. According to the foregoing method, the audio play apparatus can determine the play probability of the audio file. This provides a specific resolving approach for specific implementation of the solution, and therefore improves practicality and flexibility of the solution.

With reference to any one of the first aspect of the embodiments of the present invention, or the first or the second possible implementation of the first aspect of the embodiments of the present invention, in a fourth implementation of the first aspect of the embodiments of the present invention, the determining, by the audio play apparatus, a play probability of the audio file according to the identification information corresponding to the audio file may include:

playing, by the music play apparatus, a to-be-played audio file set constituted by at least one audio file, where the to-be-played audio file set may be a playlist, the user integrates the playlist according to preference of the user, and there may be multiple playlists;
determining, by the audio play apparatus, an average play probability of the audio file according to a total quantity of identifiers in the to-be-played audio file set, where the average play probability = 1/the total quantity of identifiers in the to-be-played audio file set;
calculating, by the audio play apparatus, a first play probability according to a quantity of identifiers in identification information of a first audio file, where a calculation manner is: the first play probability = the average play probability x the quantity of identifiers; and similarly, determining, by the audio play apparatus, a second play probability according to a quantity of identifiers in identification information of a second audio file, where both the first audio file and the second audio file are audio files in the to-be-played audio file set, the quantity of identifiers in the identification information of the first audio file is greater than or equal to 2, the quantity of identifiers in the identification information of the second audio file is greater than the quantity of identifiers in the identification information of the first audio file, and it should be noted that a sequence of calculating the first play probability and the second play probability is not limited;
calculating, by the audio play apparatus, a play probability sum of the audio file in the to-be-played audio file set according to the average play probability, the first play probability, and the second play probability; further obtaining, by the audio play apparatus, a target random probability according to the average play probability and the play probability sum; and
finally determining, by the audio play apparatus, the play probability of the audio file in the to-be-played audio file set according to the target random probability.

Further, in this embodiment of the present invention, the another audio file play control method is provided. The audio play apparatus plays the to-be-played audio file set constituted by the at least one audio file.

The audio play apparatus first determines the average play probability of the audio file according to the total quantity of identifiers in the to-be-played audio file set, then determines the first play probability according to the quantity of identifiers in the identification information of the first audio file, determines the second play probability according to the quantity of identifiers in the identification information of the second audio file, and finally determines the play probability sum of the audio file in the to-be-played audio file set according to the average play probability, the first play probability, and the second play probability. The audio play apparatus may obtain the target random probability according to the average play probability and the play probability sum, and determine the play probability of the audio file in the to-be-played audio file set according to the target random probability. Selecting a to-be-played audio file in the foregoing manner provides another specific implementation approach for the solution of the present invention, and this improves flexibility and practicality of the solution.

With reference to the fourth possible implementation of the first aspect of the embodiments of the present invention, in a fifth implementation of the first aspect of the embodiments of the present invention, the determining, by the audio play apparatus, a play probability sum of the audio file in the to-be-played audio file set according to the average play probability, the first play probability, and the second play probability includes: calculating, by the audio play apparatus, the play probability sum of the audio file in the to-be-played audio file set by using the following formula:

$$SUM = 1/n + a + b,$$

where SUM represents the play probability sum of the audio file in the to-be-played audio file set, 1/n represents the average play probability, a represents the first play probability of the first audio file, b represents the second play probability of the second audio file, the first audio file is likely to include multiple audio files whose play probabilities are the same, the second audio file is also likely to include audio files whose play probabilities are the same, and the first play probability corresponding to the first audio file is less than the second play probability corresponding to the second audio file.

Still further, in this embodiment of the present invention, a specific method for calculating, by the audio play apparatus, the play probability sum of the audio file in the to-be-played audio file set is provided. The play probability sum can be obtained by means of calculation by using the formula, and is applied to subsequent data processing. This improves operability and practicality of the solution.

With reference to the fifth possible implementation of the first aspect of the embodiments of the present invention, in a sixth implementation of the first aspect of the embodiments of the present invention, the obtaining, by the audio play apparatus, a target random probability according to the average play probability and the play probability sum includes: determining, by the audio play apparatus before obtaining the target random probability, a range within which the target random probability falls, where the target random probability may be randomly obtained according to the following range:

$$1/n \leq k \leq SUM,$$

where 1/n represents the average play probability, SUM represents the play probability sum of the audio file in the to-be-played audio file set, and k represents the target random probability. Not every numerical value randomly selected by the audio play apparatus can be used as the target random probability. In the random play mode, the target random probability k should be within a reasonable range, that is, be greater than or equal to the average play probability 1/n and less than or equal to the play probability sum SUM.

Still further, in this embodiment of the present invention, the range from which the target random probability is randomly obtained is limited, and the range should be greater than or equal to the average play probability and less than or equal to the play probability sum. Selecting the target random probability from the range can ensure properness of the finally calculated play probability of the audio file. This improves practicality and operability of the solution.

With reference to the sixth possible implementation of the first aspect of the embodiments of the present invention, in a seventh implementation of the first aspect of the embodiments of the present invention, the playing, by the audio play apparatus, the audio file according to the play probability of the audio file may include: when the target random probability is equal to the average play probability, that is, when k=1/n, randomly selecting, by the audio play apparatus, an audio file whose play probability is the average play probability, to play the audio file; that is, randomly selecting, by the audio play apparatus, a value from the range that is greater than or equal to the average play probability 1/n and less than or equal to the play probability sum SUM, as the target random probability, and if the selected target random probability happens to be equal to the average play probability, randomly selecting, by the audio play apparatus, an audio file from the to-be-played audio file set at an equal probability, to play the audio file; in other words, when the target random probability k = the average play probability 1/n, selecting, by the audio play apparatus, the audio file whose play probability is the average play probability, to play the audio file.

In addition, when the target random probability is not equal to the average play probability, two ranges may be divided. A first range is $1/n<k\leq(1/n+a)$, and a second range is $(1/n+a)<k\leq SUM$. When the target random probability is greater than the average play probability and is less than or equal to the sum of the average play probability and the first play probability, that is, when $1/n<k\leq(1/n+a)$, the audio play apparatus randomly selects the first audio file whose play probability is the first play probability, to play the first audio file; or when the target random probability is greater than the sum of the average play probability and the first play probability and is less than or equal to the play probability sum, that is, when $(1/n+a)<k\leq SUM$, the audio play apparatus randomly selects the second audio file whose play probability is the second play probability, to play the second audio file.

Still further, in this embodiment of the present invention, a method for randomly playing an audio file when the target random probability is equal to the average play probability is described. When the target random probability is equal to the average play probability, the audio play apparatus randomly selects, at an equal probability, the audio file whose play probability is the average play probability from the to-be-played audio file set, to play the audio file. The foregoing manner provides a corresponding processing manner and resolving approach for specific implementation of the solution, and therefore improves feasibility and practicality of the solution. A method for randomly playing an audio file when the target random probability is not equal to the average play probability is described as follows: When the target random probability is greater than the average play probability and is less than or equal to the sum of the average play probability and the first play probability, the audio play apparatus selects the audio file whose play probability is the first play probability from the to-be-played audio file set, to play the audio file; when the target random probability is greater than the sum of the average play probability and the first play probability and is less than or equal to the play probability sum, the audio play apparatus selects the audio file whose play probability is the second play probability from the to-be-played audio file set, to play the audio file. The foregoing manner further provides a corresponding processing manner and resolving approach for specific implementation of the solution, and therefore further improves feasibility and practicality of the solution.

With reference to any one of the first aspect of the embodiments of the present invention, or the first to the seventh implementations of the first aspect of the embodiments of the present invention, in an eighth implementation of the first aspect of the embodiments of the present invention, before the obtaining, by an audio play apparatus, identification information corresponding to an audio file, the method may further include:

first obtaining, by the audio play apparatus, a flag bit in the audio file, where the flag bit includes a first flag bit or a second flag bit; however, it can be understood that the audio play apparatus may first obtain a flag bit of each audio file and then determine, according to a play probability, a to-be-played-next audio file from an audio file whose flag bit is the first flag bit, or may first select a to-be-played-next audio file according to a play probability, then determine whether a flag bit of the to-be-played audio file is the first flag bit, and if yes, determine to play the audio file, or if the flag bit of the to-be-played audio file is the second flag bit, reselect a to-be-played audio file from an audio file whose flag bit is the first flag bit; and

the step of playing, by the audio play apparatus, the audio file according to the play probability of the audio file may specifically include:
when the flag bit in the audio file is the first flag bit, playing, by the audio play apparatus, the audio file according to the play probability of the audio file, that is, playing, by the audio play apparatus, only the audio file whose flag bit is the first flag bit.

Moreover, in this embodiment of the present invention, to prevent a same audio file from being successively played twice, the flag bit of the to-be-played audio file may be obtained first, and then, the audio play apparatus selects the audio file whose flag bit is the first flag bit, and determines the to-be-played-next audio file according to the play probability of the audio file. If the flag bit is the first flag bit, it indicates that the audio file can be played, because the audio file is not a previously played audio file. Conversely, if the flag bit is the second flag bit, it indicates that the audio file corresponding to the second flag bit is just played, and the audio file is not considered for a next play. This ensures that a same audio file is not played twice or even more than twice, so that the user gets a fresh feeling psychologically. This helps improve user experience.

With reference to the eighth possible implementation of the first aspect of the embodiments of the present invention, in a ninth implementation of the first aspect of the embodiments of the present invention, the method may further include:
determining, by the audio play apparatus from the audio file whose flag bit is the first flag bit, that the to-be-played-next audio file is a third audio file according to the play probability of the audio file, updating, by the audio play apparatus, the first flag bit in the third audio file to the second flag bit when the third audio file is played, and when playing of the third audio file is completed or the user switches from the third audio file, selecting a to-be-played-next audio file from an audio file excluding the third audio file, where the to-be-played-next audio file still needs to be determined according to the probability of the audio file.

Moreover, in this embodiment of the present invention, a method for recovering the flag bit in a timely manner is provided. When the audio play apparatus determines, from the audio file whose flag bit is the first flag bit and according to the play probability of the audio file, that the to-be-played-next audio file is the third audio file, at a moment when the third audio file is started, the audio play apparatus updates the first flag bit originally corresponding to the third audio file to the second flag bit. In this way, if the user frequently performs audio file switching within a short time, it can still be ensured that the audio play apparatus doe not successively play a same audio file repeatedly. This further improves user experience.

A second aspect of the embodiments of the present invention provides an audio play apparatus, including:

an obtaining module, configured to obtain identification information corresponding to an audio file;
a determining module, configured to determine a play probability of the audio file according to the identification information, obtained by the obtaining module, corresponding to the audio file; and
a play module, configured to play the audio file according to the play probability, determined by the determining module, of the audio file.

With reference to the second aspect of the embodiments of the present invention, in a first implementation of the second aspect of the embodiments of the present invention, a play mode of the audio play apparatus is a random play mode.

With reference to the second aspect of the embodiments of the present invention, in a second implementation of the second aspect of the embodiments of the present invention, the identification information includes an identifier value and a quantity of identifiers.

With reference to any one of the second aspect of the embodiments of the present invention, or the first or the second possible implementation of the second aspect of the embodiments of the present invention, in a third implementation of the second aspect of the embodiments of the present invention, the determining module includes:

a first play unit, configured to play a to-be-played audio file set constituted by at least one audio file;
a first determining unit, configured to determine an average play probability of the audio file according to a total quantity of identifiers in the to-be-played audio file set played by the first play unit; and
a second determining unit, configured to determine the play probability of the audio file in the to-be-played audio file set according to the quantity of identifiers of the audio file and the average play probability that is determined by the first determining unit.

With reference to any one of the second aspect of the embodiments of the present invention, or the first or the second possible implementation of the second aspect of the embodiments of the present invention, in a fourth implementation of the second aspect of the embodiments of the present invention, the determining module includes:

a second play unit, configured to play a to-be-played audio file set constituted by at least one audio file;
a third determining unit, configured to determine an average play probability of the audio file according to a total quantity of identifiers in the to-be-played audio file set played by the second play unit;
a fourth determining unit, configured to determine a first play probability according to a quantity of identifiers in identification information of a first audio file, and determine a second play probability according to a quantity of identifiers in identification information of a second audio file, where both the first audio file and the second audio file are audio files in the to-be-played audio file set, the quantity of identifiers in the identification information of the first audio file is greater than or equal to 2, and the quantity of identifiers in the identification information of the second audio file is greater than the quantity of identifiers in the identification information of the first audio file;
a fifth determining unit, configured to determine a play probability sum of the audio file in the to-be-played audio file set according to the average play probability determined by the third determining unit and the first play probability and the second play probability that are determined by the fourth determining unit;
an obtaining unit, configured to obtain a target random probability according to the average play probability determined by the third determining unit and the play probability sum determined by the fifth determining unit; and
a sixth determining unit, configured to determine the play probability of the audio file in the to-be-played audio file set according to the target random probability obtained by the obtaining unit.

With reference to the fourth possible implementation of the second aspect of the embodiments of the present invention, in a fifth implementation of the second aspect of the embodiments of the present invention, the fifth determining unit includes:

a calculation subunit, configured to calculate the play probability sum of the audio file in the to-be-played audio file set in the following manner:

$$SUM = 1/n + a + b,$$

where SUM represents the play probability sum of the audio file in the to-be-played audio file set, $1/n$ represents the average play probability, a represents the first play probability of the first audio file, and b represents the second play probability of the second audio file.

With reference to the fifth possible implementation of the second aspect of the embodiments of the present invention, in a sixth implementation of the second aspect of the embodiments of the present invention, the obtaining unit includes:

an obtaining subunit, configured to randomly obtain the target random probability according to the following range:

$$1/n \leq k \leq SUM,$$

where 1/n represents the average play probability, SUM represents the play probability sum of the audio file in the to-be-played audio file set, and k represents the target random probability.

With reference to the sixth possible implementation of the second aspect of the embodiments of the present invention, in a seventh implementation of the second aspect of the embodiments of the present invention, the play module includes:

a first selection unit, configured to: when k=1/n, select an audio file whose play probability is the average play probability, to play the audio file;
a second selection unit, configured to: when 1/n<k≤(1/n+a), select the first audio file whose play probability is the first play probability, to play the first audio file; and
a third selection unit, configured to: when (1/n+a)<k≤SUM, select the second audio file whose play probability is the second play probability, to play the second audio file.

With reference to any one of the second aspect of the embodiments of the present invention, or the first to the seventh possible implementations of the second aspect of the embodiments of the present invention, in an eighth implementation of the second aspect of the embodiments of the present invention, the audio play apparatus may further include:

an identifier obtaining module, configured to obtain a flag bit in the audio file, where the flag bit includes a first flag bit or a second flag bit; and
the play module includes:
a third play unit, configured to play the audio file according to the play probability of the audio file when the flag bit in the audio file is the first flag bit.

With reference to the eighth possible implementation of the second aspect of the embodiments of the present invention, in a ninth implementation of the second aspect of the embodiments of the present invention, the audio play apparatus may further include:
an update module, configured to: when a third audio file is played, update the first flag bit in the third audio file to the second flag bit.

A third aspect of the embodiments of the present invention provides an audio play apparatus, including a memory, a transceiver, a processor, and a bus system, where

the memory is configured to store a program;
the processor is configured to execute the program in the memory, to specifically implement the following steps:

controlling the transceiver to obtain identification information corresponding to an audio file;
determining a play probability of the audio file according to the identification information corresponding to the audio file; and
playing the audio file according to the play probability of the audio file; and

the bus system is configured to connect the memory, the transceiver, and the processor, so that the memory, the transceiver, and the processor communicate.

Optionally, a play mode of the audio play apparatus is a random play mode.
Optionally, the identification information includes an identifier value and a quantity of identifiers.
Optionally, the processor is configured to execute the program in the memory, to specifically further perform the following steps:

playing a to-be-played audio file set constituted by at least one audio file;
determining an average play probability of the audio file according to a total quantity of identifiers in the to-be-played audio file set; and
determining the play probability of the audio file in the to-be-played audio file set according to the quantity of identifiers of the audio file and the average play probability.

Optionally, the processor is configured to execute the program in the memory, to specifically further perform the following steps:

playing a to-be-played audio file set constituted by at least one audio file;
determining an average play probability of the audio file according to a total quantity of identifiers in the to-be-played audio file set;
determining a first play probability according to a quantity of identifiers in identification information of a first audio file, and determining a second play probability according to a quantity of identifiers in identification information of a second audio file, where both the first audio file and the second audio file are audio files in the to-be-played audio file set, the quantity of identifiers in the identification information of the first audio file is greater than or equal to 2, and the quantity of identifiers in the identification information of the second audio file is greater than the quantity of identifiers in the identification information of the first audio file;

determining a play probability sum of the audio file in the to-be-played audio file set according to the average play probability, the first play probability, and the second play probability;

controlling, according to the average play probability and the play probability sum, the transceiver to obtain a target random probability; and

determining the play probability of the audio file in the to-be-played audio file set according to the target random probability.

Optionally, the processor is configured to execute the program in the memory, to specifically further perform the following step:

calculating the play probability sum of the audio file in the to-be-played audio file set in the following manner:

$$SUM = 1/n + a + b,$$

where SUM represents the play probability sum of the audio file in the to-be-played audio file set, 1/n represents the average play probability, a represents the first play probability of the first audio file, and b represents the second play probability of the second audio file.

Optionally, the processor is configured to execute the program in the memory, to specifically further perform the following step:

randomly obtaining the target random probability according to the following range:

$$1/n \leq k \leq SUM,$$

where 1/n represents the average play probability, SUM represents the play probability sum of the audio file in the to-be-played audio file set, and k represents the target random probability.

Optionally, the processor is configured to execute the program in the memory, to specifically further perform the following steps:

when k=1/n, selecting an audio file whose play probability is the average play probability, to play the audio file;

when 1/n<k≤(1/n+a), selecting the first audio file whose play probability is the first play probability, to play the first audio file; or

when (1/n+a)<k≤SUM, selecting the second audio file whose play probability is the second play probability, to play the second audio file.

Optionally, the processor is configured to execute the program in the memory, to specifically further perform the following steps:

controlling the transceiver to obtain a flag bit in the audio file, where the flag bit includes a first flag bit or a second flag bit; and

when the flag bit in the audio file is the first flag bit, playing the audio file according to the play probability of the audio file.

Optionally, the processor is configured to execute the program in the memory, to specifically further perform the following step:

when a third audio file is played, updating the first flag bit in the third audio file to the second flag bit.

It can be learned from the foregoing technical solutions that the embodiments of the present invention have the following advantages:

In the embodiments of the present invention, the audio file play control method is provided. The audio play apparatus obtains the identification information corresponding to the audio file, determines the play probability of the audio file according to the identification information corresponding to the audio file, and finally plays the audio file according to the play probability of the audio file. In this way, the quantity of play times of the audio file is determined in the random play mode according to the identification information corresponding to the audio file, that is, according to the degree to which the user likes the audio file, with no need to play multiple audio files at an equal probability. This improves user experience and increases solution flexibility.

**BRIEF DESCRIPTION OF DRAWINGS**

FIG. 1 is a schematic diagram of an embodiment of an audio file play control method according to embodiments of the present invention;

FIG. 2 is a schematic diagram of a music player interface for audio file play control according to an embodiment of the present invention;

FIG. 3 is a schematic diagram of an embodiment of an audio play apparatus according to the embodiments of the present invention;

FIG. 4 is a schematic diagram of another embodiment of an audio play apparatus according to the embodiments of the present invention;

FIG. 5 is a schematic diagram of another embodiment of an audio play apparatus according to the embodiments of the present invention;

FIG. 6 is a schematic diagram of another embodiment of an audio play apparatus according to the embodiments of the present invention;

FIG. 7 is a schematic diagram of another embodiment of an audio play apparatus according to the embodiments of the present invention;

FIG. 8 is a schematic diagram of another embodiment of an audio play apparatus according to the embodiments of the present invention;

FIG. 9 is a schematic diagram of another embodiment of an audio play apparatus according to the embodiments of the present invention;

FIG. 10 is a schematic diagram of another embodiment of an audio play apparatus according to the embodiments of the present invention;

FIG. 11 is a schematic structural diagram of an audio play apparatus according to an embodiment of the present invention; and

FIG. 12 is another schematic structural diagram of an audio play apparatus according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons skilled in the art based on the embodiments of the present invention without creative efforts shall fall within the protection scope of the present invention.

Terms "first", "second", "third", "fourth", and the like (if existent) in the specification, claims, and accompanying drawings of the present invention are intended to distinguish between similar objects, but do not necessarily indicate a specific order or sequence. It should be understood that data termed in such a manner are interchangeable in a proper circumstance, so that the embodiments described herein can be implemented in a sequence other than a sequence in content illustrated or described herein. In addition, terms "include", "have", and any variations thereof are intended to cover nonexclusive inclusion. For example, a process, method, system, product, or device that includes a series of steps or units is not necessarily limited to the explicitly listed steps or units, but may include another step or unit that is not explicitly listed or that is inherent to the process, method, product, or device.

It should be understood that the present invention is applied to a scenario of audio play. The scenario may be specifically a random play mode in audio play. In daily life, there are multiple types of audio play software often used by users, for example, the "Tiantianjingting" client, the "Kuwo Music Box" client, the "Kugou Music" client, and the "NetEase Music" client. All these audio file play clients have a random play function. Currently, an algorithm referred to as a linear congruential algorithm is widely used for random play. Each audio file in a same list has a same play probability. In addition, in the embodiments of the present invention, an apparatus configured to play an audio file is referred to as an audio play apparatus, and may be specifically a personal computer (English full name: Personal Computer, PC for short), a mobile phone, a music player (English full name: Moving Pictures Experts Group Audio Layer 3, MP3 for short), a tablet computer, or the like. Herein, the mobile phone is used as an example for description. However, in actual application, this should not be construed as a limitation on the solutions of the present invention.

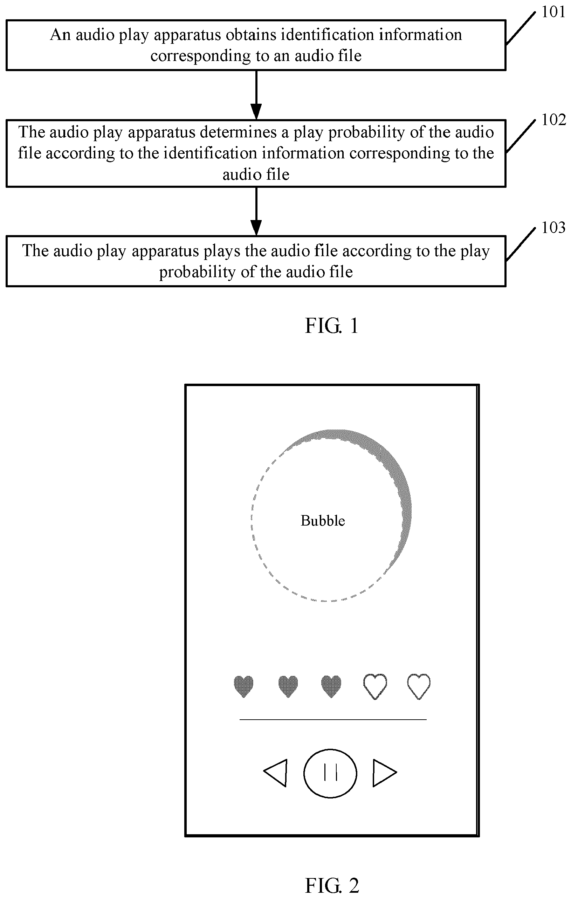

The following describes in detail an audio file play control method in the solutions of the present invention. Referring to FIG. 1, an embodiment of the audio file play control method in the embodiments of the present invention includes the following steps.

101: An audio play apparatus obtains identification information corresponding to an audio file.

In this embodiment, when a user starts a music play client on the audio play apparatus, the user may select different play modes, for example, select one play mode from modes such as a sequential play mode, a loop play mode, and a list random play mode. In this solution, a default play mode that is used is random play.

In the default random play mode, the audio play apparatus may directly obtain identification information with which the user labels the audio file last time or even earlier.

When the audio play client is started, the random play mode is selected, or the play mode is the random play mode by default. Then, the audio play apparatus starts to play the audio file in the random play mode.

102: The audio play apparatus determines a play probability of the audio file according to the identification information corresponding to the audio file.

In this embodiment, the audio play apparatus may determine the play probability of the audio file according to the identification information corresponding to the audio file. The identification information corresponding to the audio file includes information used to calculate the play probability of the audio file, so that the audio play apparatus can determine, according to different identification information, play probabilities corresponding to different audio files.

In the present invention, the play probability of the audio file may be obtained by using multiple probability calculation methods. Alternatively, the play probability of the audio file may be obtained by using a correspondence between the identification information and the play probability. In the following embodiments, how to obtain the play probability of the audio file in different scenarios is described in detail. It should be noted that this is not limited to the several probability calculation methods mentioned below in actual application, and it should not be construed as a limitation on the present invention.

103: The audio play apparatus plays the audio file according to the play probability of the audio file.

In this embodiment, the audio play apparatus determines a play probability of each audio file according to identification information corresponding to the audio file, and plays a corresponding audio file according to the play probability of each audio file.

In this embodiment of the present invention, the audio file play control method is provided. The audio play apparatus obtains the identification information corresponding to the audio file, determines the play probability of the audio file according to the identification information corresponding to the audio file, and finally plays the audio file according to the play probability of the audio file. In this way, a quantity of play times of the audio file is determined in the random play mode according to the identification information corresponding to the audio file, that is, according to a degree to which the user likes the audio file, with no need to play multiple audio files at an equal probability. This improves user experience and increases solution flexibility.

Optionally, on a basis of the embodiment corresponding to the foregoing FIG. 1, in a first optional embodiment of the audio file play control method provided in the embodiments of the present invention, the play mode of the audio play apparatus is the random play mode.

In this embodiment, the play mode used by the audio play apparatus is the random play mode.

The random play mode is actually a random play algorithm. To better perform random play, a new algorithm needs to be developed. There are mainly two types of common algorithms for random music play: a shuffle algorithm and a random algorithm.

Just opposite to a sorting algorithm, the shuffle algorithm is a process of changing from ordered to unordered, and is commonly referred to as a shuffling algorithm. The shuffle algorithm randomizes a sequence of audio files in a playlist, changing the playlist into an out-of-order playlist without any relationship with the original sequence of the audio files, to play the audio file. In addition, the shuffle algorithm supports returning, when the user taps "previous", to an audio file that has just been played.

The random algorithm is: performing an operation of a random number when a to-be-played song is selected, to obtain an index of the to-be-played song in a playlist. That is, the playlist itself is not randomized, and merely a random function is used to select a song from the playlist for play.

Currently, a relatively common random number generation algorithm is implemented based on a linear congruential algorithm. For example, the C-language standard library function rand() generates a random number by using the linear congruential algorithm. The linear congruential algorithm can generate evenly distributed random numbers. However, this depends on a specified upper random-number limit. A smaller upper limit indicates a higher repetition probability of a generated random number.

Another disadvantage of the random algorithm is as follows: Completely the same as a function of tapping "next", a function of tapping "previous" is to regenerate a random number and select, by using the random number, a song from the playlist for play, instead of returning to a song that has just been played. Certainly, this disadvantage can be remedied by providing a historical record, except that additional space needs to be occupied.

Moreover, in this embodiment of the present invention, the play mode of the audio play apparatus is limited to the random play mode. In the prior art, each audio file has a same play probability when the random play mode is used. However, in the present invention, the quantity of play times of the audio file can be determined in the random play mode according to the identification information corresponding to the audio file. Therefore, user experience is further improved, and solution flexibility is increased.

Optionally, on a basis of the first embodiment corresponding to the foregoing FIG. 1, in a second optional embodiment of the audio file play control method provided in the embodiments of the present invention, the identification information includes an identifier value and a quantity of identifiers.

In this embodiment, the identification information used to determine the play probability of the audio file includes the identifier value and the quantity of identifiers. Specifically, the identifier value is a specific identifier value that is set for each audio file, and identifier values used for different audio files are inevitably different. Generally, when an identifier value of an audio file is {1}, an identifier value of a next audio file cannot be {1}, but may be in another different representation form such as {2}, {2,3}, or {2,2}.

The quantity of identifiers may be represented in a form of user preference information in actual application. For example, the user may input user preference information of the user for an audio file by using a music player interface. The user preference information is mainly used to represent a degree to which the user likes the audio file. A higher preference degree indicates a higher play probability. The audio play apparatus receives the user preference information that is set by the user for the audio file, and may play, according to the user preference information, a play probability prompt tone corresponding to the audio file.

Specifically, the music player interface provides, for the user, an option for setting preference information for a current audio file. Certainly, it can be understood that, in actual application, an option for selecting preference information for an audio file may be provided for the user in another interface alternatively.

The following provides descriptions by using an example in which user preference information for an audio file is set in a music player interface. Referring to FIG. 2, FIG. 2 is a schematic diagram of a music player interface for audio file play control according to an embodiment of the present invention. As shown in the figure, a user may determine preference information for a current audio file by setting a heart-shaped pattern. A larger quantity of heart-shaped pattern marks indicates a higher play probability of the current audio file. There are a total of five hearts in FIG. 2. The user selects three of the five hearts. This indicates that a play probability of the current audio file is three times a play probability of an audio file marked with one heart, and that a quantity of identifiers in identification information of the current audio file is 3. It should be noted that the heart-shaped selection pattern is merely an example. Alternatively, another pattern may be used, for example, a star-shaped pattern, a square pattern, or a round pattern. This is not limited herein.

There are also multiple implementations of setting the preference information for the current audio file. For example, a drag bar is set, and the user sets, by sliding the drag bar, a degree to which the user likes the current audio file. Generally, dragging the drag bar farther backward indicates a higher degree to which the user likes the current audio file. A system determines a quantity of identifiers of the current audio file according to a position of the preset drag bar, and changes the play probability of the current audio file.

In addition, the user may alternatively set the preference information for the audio file by using a shortcut. For example, when the audio play apparatus receives information that the user simultaneously presses a volume button "+" and a volume button "-", it indicates that the user increases a quantity of identifiers of the currently played audio file by 1, and a corresponding play probability is increased by one level. When the audio play apparatus receives information that the user simultaneously presses a power button and a volume button "+" or simultaneously presses a power button and a volume button "-", it indicates that the user decreases a quantity of identifiers of the currently played audio file by 1, and a corresponding play probability is decreased by one level. At the same time, a heart-shaped pattern status is updated in the music player interface.

Certainly, the user may also set the preference information for the audio file by means of specific gesture recognition. For example, in a screen-off state, the user makes a rightward-sliding gesture. After a sensing module of the audio play apparatus receives the rightward-sliding gesture, a quantity of identifiers of the currently played audio file is increased by 1, and a corresponding play probability is increased by one level. If the user makes a leftward-sliding gesture, after the sensing module of the audio play apparatus receives the leftward-sliding gesture, a quantity of identifiers of the currently played audio file is decreased by 1, and a corresponding play probability is decreased by one level.

It should be noted that, in addition to the foregoing several methods, there may further be another optional solution for setting the preference information for the audio file. Descriptions herein should not be construed as a limitation on the solutions of the present invention.

To allow the user to know the probability of the current audio file in real time, when an audio file play interface is not present, a specific prompt tone may be played to notify the user of the probability of the current audio file. Generally, a quantity of identifiers indicated by the preference information is equal to a quantity of times of playing the prompt tone. The prompt tone may also be set by the user in a user-defined manner, and may be a prompt tone provided by the system, may be a prompt tone downloaded by the user, or may be a prompt tone obtained by the user by means of sound recording.

According to the foregoing solution, the audio play apparatus can determine the play probability of the audio file according to the identification information that includes the identifier value and the quantity of identifiers. Meanwhile, if the play probability prompt tone corresponding to the audio file can also be played, the user can learn the probability of the audio file, with no need to view the music player interface. This improves practicality and flexibility of the solution when it is inconvenient for the user to view the music player interface, and the user can conveniently adjust the probability of the current audio file in real time, thereby enhancing user experience of the solution.

Optionally, on a basis of the foregoing FIG. 1 and the first or the second embodiment corresponding to FIG. 1, in a third optional embodiment of the audio file play control method provided in the embodiments of the present invention, the determining, by the audio play apparatus, a play probability of the audio file according to the identification information corresponding to the audio file may include:

playing, by the audio play apparatus, a to-be-played audio file set constituted by at least one audio file;
determining, by the audio play apparatus, an average play probability of the audio file according to a total quantity of identifiers in the to-be-played audio file set; and
determining, by the audio play apparatus, the play probability of the audio file in the to-be-played audio file set according to the quantity of identifiers of the audio file and the average play probability.

In this embodiment, the audio play apparatus obtains, in the random play mode, the identification information corresponding to the audio file, and determines the play probability of the audio file according to the identification information corresponding to the audio file.

Specifically, the music play apparatus plays the to-be-played audio file set constituted by the at least one audio file. The to-be-played audio file set may be a playlist, and the user integrates the playlist according to preference of the user. There may be multiple playlists. For different playlists, a same play mode or different play modes may be executed. For example, an audio file in a list A is played in the random play mode, and an audio file in a list B is played in a sequential play mode. In this embodiment, the random play mode is used as an example for description.

The audio play apparatus determines the average play probability of the audio file according to the total quantity of identifiers in the to-be-played audio file set. A manner of calculating the average play probability is: the average play probability = 1/the total quantity of identifiers in the to-be-played audio file set. For example, if the total quantity of identifiers in the to-be-played audio file set is 10, the average play probability of the audio file is 1/10.

The audio play apparatus determines the play probability of the audio file in the to-be-played audio file set according to the quantity of identifiers of the audio file and the average play probability. Specifically, the audio play apparatus may calculate the play probability of the audio file according to the quantity of identifiers of the audio file. The audio play apparatus uses the average play probability as a play probability of a default audio file. The default audio file is an audio file for which the user does not adjust user preference information. The user preference information is corresponding to a lowest level, and the default audio file carries one identifier. If the quantity of identifiers of the audio file is i, the play probability of the audio file = i x the average play probability. For example, if the average play probability is 1/10 and the quantity of identifiers of audio file A is 3, the play probability of the audio file is 3/10.

The identifier value of the current audio file is used to identify the current audio file, and is an identifier value of a previous audio file plus 1. The quantity of identifiers is a quantity of identifiers set by the user for the current audio file, that is, is represented as the specified preference information.

Generally, a preset relationship between the play probability of the audio file and the identifier value and the quantity of identifiers corresponding to the audio file is: A larger quantity of identifiers of the audio file indicates a higher play probability of the audio file. However, this is not limited to the foregoing preset relationship in actual application, but it should be noted that there is a correspondence between the play probability of the audio file and the quantity of identifiers of the audio file.

For the step of determining, by the audio play apparatus, the play probability of the audio file in the to-be-played audio file set according to the quantity of identifiers of the audio file and the average play probability, there may be the following processing manner:

The audio play apparatus determines the identification information of the audio file according to a sequence of the audio file in the to-be-played audio file set. The identification information includes the quantity of identifiers and an identifier value corresponding to each identifier. Different audio files with a same play probability have different identifier values.

The default audio file may be referred to as a first audio file. In this case, a play probability of the first audio file is the average play probability. Generally, a quantity of identifiers of an audio file whose play probability is the average play probability is 1. An audio file for which the user has set user preference information is referred to as a second audio file. In this case, a play probability of the second audio file is not the average play probability, and a quantity of identifiers of the second audio file is greater than or equal to 2. The audio play apparatus may determine the identifier value and the quantity of identifiers of the audio file according to the sequence of the audio file in the to-be-played audio file set.

If there are a total of 10 identifiers in the to-be-played audio file set, the play probability of the audio file may be first obtained according to the quantity of identifiers. For example, if the play probability of the first audio file is 1/10 and the quantity of identifiers of the second audio file is 2, the play probability of the second audio file is 3/10. Then, a position of the first audio file in the to-be-played audio file set is further determined. If the first audio file is the third audio file in the playlist, the second audio file is the fourth file in the playlist, and there are an audio file A and an audio file B before the first audio file, identification information of the first audio file and the second audio file may have the following two cases:

A first case is as follows: It is assumed that the audio file A is ranked first in the list, an identifier value of the audio file A is 1, and a quantity of identifiers of the audio file A is 1. Then, identification information of the audio file A is represented as {1}. The audio file B is ranked second in the list, an identifier value of the audio file B is 2, and a quantity of identifiers of the audio file B is 2. Then, identification information of the audio file B is represented as {2,2}. In this case, when the quantity of identifiers of the first audio file C after the audio file B is 1, the identification information of C is {3}, and the identification information of the second audio file D is {4,4,4}.

A second case is as follows: It is assumed that the audio file A is ranked first in the list, an identifier value of the audio file A is 1, and a quantity of identifiers of the audio file A is 2. Then, identification information of the audio file A is {1,2}. The first digit of an identifier value of the audio file B needs to remain successive to the last digit of the previous audio file. Therefore, the first digit of the identifier value of the audio file B is 3. If a quantity of identifiers of the audio file B is 3, identification information of the audio file B is {3,4,5}. In this case, the corresponding identification information of the first audio file after the audio file B may be represented by {6}, and the identification information of the second audio file is {7,8,9}.

It should be noted that representation of the identification information is not limited to the foregoing two manners. Alternatively, the identification information corresponding to the audio file may be represented by using a letter or a symbol. For example, identification information of the audio file A is {a,b}, and identification information of the audio file B is {c}. This is not limited herein.

Generally, when a quantity of audio files in the to-be-played audio file set is not especially large, the user is likely to set user preference information for each audio file. When such a mode is used, a to-be-played audio file may be determined by referring to the following manner: The quantity of identifiers of the audio file is determined according to the user preference information that is set by the user. A larger quantity of identifiers indicates a higher probability that the audio file is selected for play. Referring to FIG. 2 for an understanding, FIG. 2 is the schematic diagram of the music player interface for audio file play control according to the embodiment of the present invention. For example:

> when an identifier corresponding to a first audio file is {1}, it indicates that user preference information is one heart-shaped pattern;
> when an identifier corresponding to a second song is {2}, it indicates that user preference information is one heart-shaped pattern;
> when an identifier corresponding to a third song is {3,4}, it indicates that user preference information is two heart-shaped patterns;
> when an identifier corresponding to a fourth song is {5}, it indicates that user preference information is one heart-shaped pattern;
> when an identifier corresponding to a fifth song is {6,7,8}, it indicates that user preference information is three heart-shaped patterns, and so on.

The audio play apparatus selects a largest identifier value, which is y, from the to-be-played audio file set, and then randomly selects one numerical value from 1 to y. An audio file whose identification information includes the numerical value is the to-be-played audio file.

In addition to the content described above, when the user does not set user preference information for each audio file in the to-be-played audio file set, the audio play apparatus may alternatively use the following method to determine a preset quantity of play times of each audio file, and determine a multiple relationship between play probabilities of the audio files according to the preset quantity of play times.

Specifically, it is assumed that the total quantity of identifiers of the audio file in the to-be-played audio file set is 20, and the user sets user preference information for only the first audio file and the second audio file. The user preference information is classified into a total of five levels. A highest level is not greater than 1/2. Then, the following may be set: The first level may be 1/10, the second level is 2/10, the third level is 3/10, the fourth level is 4/10, and the fifth level is 5/10. The first audio file is of the second level, and the second audio file is of the third level 3/10.

The preset quantity n of play times of the audio file is determined according to the preference information that is set by the user by using the following formula:

$$n=N \times (1/N+M),$$

where N represents the total quantity of identifiers in the to-be-played audio file set, and M represents a play level of the current audio file.

A preset quantity of play times corresponding to every audio file for which the user does not set user preference information is 20x(1/20+0)=1. The audio file for which the user does not set user preference information may be referred to as the default audio file.

A preset quantity of play times corresponding to the first audio file is 20x(1/20+2/10)=5. A preset quantity of play times corresponding to the second audio file is 20x(1/20+3/10)=7.

In the foregoing manner, the following can be obtained: The preset quantity of play times of the first audio file is five times that of the default audio file, and the preset quantity of play times of the second audio file is seven times that of the default audio file. In this way, the audio play apparatus can randomly select, according to the preset quantity of play times that is obtained by means of calculation, the to-be-played audio file for play.

Further, in this embodiment of the present invention, the audio play apparatus determines the quantity of audio files in the to-be-played audio file set. The to-be-played audio file set is constituted by at least one audio file. Then, the audio play apparatus determines the average play probability of the audio file according to the total quantity of identifiers in the to-be-played audio file set, and finally determines the play probability of the audio file in the to-be-played audio file set according to the quantity of identifiers of the audio file and the average play probability. According to the foregoing method, the audio play apparatus can determine the play probability of the audio file. This provides a specific resolving approach for specific implementation of the solution, and therefore improves practicality and flexibility of the solution.

Optionally, on a basis of the foregoing FIG. 1 and the first or the second embodiment corresponding to FIG. 1, in a fourth optional embodiment of the audio file play control method provided in the embodiments of the present invention, the determining, by the audio play apparatus, a play probability of the audio file according to the identification information corresponding to the audio file may include:

> playing, by the audio play apparatus, a to-be-played audio file set constituted by at least one audio file;
> determining, by the audio play apparatus, an average play probability of the audio file according to a total quantity of identifiers in the to-be-played audio file set;
> determining, by the audio play apparatus, a first play probability according to a quantity of identifiers in identification information of a first audio file, and determining a second play probability according to a quantity of identifiers in identification information of a second audio file, where both the first audio file and the second audio file are audio files in the to-be-played audio file set, the quantity of identifiers in the identification information of the first audio file is greater than or equal to 2, and the quantity of identifiers in the identification information of the second audio file is greater than the quantity of identifiers in the identification information of the first audio file;

determining, by the audio play apparatus, a play probability sum of the audio file in the to-be-played audio file set according to the average play probability, the first play probability, and the second play probability;

obtaining, by the audio play apparatus, a target random probability according to the average play probability and the play probability sum; and

determining, by the audio play apparatus, the play probability of the audio file in the to-be-played audio file set according to the target random probability.

In this embodiment, in addition to the method mentioned in the foregoing third embodiment in which the audio play apparatus may determine the play probability of the audio file according to the identification information corresponding to the audio file, the audio play apparatus may alternatively determine the play probability of the audio file in multiple audio files carrying different identification information.

Specifically, the audio play apparatus first determines user preference information according to an audio file play level that is set by the user for the audio file. The user preference information determines identification information of each audio file. In addition, the audio play apparatus determines the average play probability according to the total quantity of identifiers of the audio file in the to-be-played audio file set, then obtains the play probabilities of the multiple audio files in the to-be-played audio file set and the play probability sum by means of calculation according to the identification information and the average play probability, and randomly selects a number from different ranges as the target random probability. The audio play apparatus may determine the play probability of the audio file in the to-be-played audio file set according to the target random probability.

It is assumed that there are a total of 100 identifiers in the to-be-played audio file set. In this case, a default average play probability is 1/100. The user preference information is classified into five levels. If a highest-level probability is 5/100, the first level may be 1/100, the second level is 2/100, the third level is 3/100, the fourth level is 4/100, and the fifth level is 5/100. When levels of an audio file A and an audio file B are both the second level, probabilities of the audio file A and the audio file B are 2/100. When levels of an audio file C and an audio file D are both the fifth level, probabilities of the audio file C and the audio file D are 5/100.

The to-be-played audio file set is divided into groups according to a probability, specifically as follows:

A probability corresponding to {A,B} is 2/100.
A probability corresponding to {C,D} is 5/100.
A probability corresponding to any other audio file is the average play probability 1/100.

It can be learned from the foregoing descriptions that the first audio file may be the audio file A or the audio file B. The user sets two "heart-shaped" levels for each of the audio file A and the audio file B. It indicates that each of the audio file A and the audio file B carries two identifiers. In this case, a play probability of the audio file A or the audio file B is 2x1/100=2/100, where "2" represents the quantity of identifiers, and "1/100" is the average play probability. As the second audio file, either of the audio file C and the audio file D carries five identifiers. In this case, a play probability of the audio file C or the audio file D is 5x1/100=5/100, where "5" represents the quantity of identifiers, and "1/100" is the average play probability. Therefore, the first play probability is 2/100, the second play probability is 5/100, the quantity of identifiers in the identification information of the first audio file (the audio file A or the audio file B) is greater than or equal to 2, and the quantity of identifiers in the identification information of the second audio file (the audio file C or the audio file D) is greater than the quantity of identifiers in the identification information of the first audio file.

The audio play apparatus determines the play probability sum of the audio file in the to-be-played audio file set according to the average play probability 1/100, the first play probability 2/100, and the second play probability 5/100, then randomly selects the target random probability from a range from the average play probability to the play probability sum, and finally obtains the play probability of the audio file in the to-be-played audio file set by means of calculation according to the target random probability.

Selecting a to-be-played audio file in the foregoing manner provides another specific implementation approach for the solution of the present invention, and this improves flexibility and practicality of the solution.

Optionally, on a basis of the fourth embodiment corresponding to the foregoing FIG. 1, in a fifth optional embodiment of the audio file play control method provided in the embodiments of the present invention, the determining, by the audio play apparatus, a play probability sum of the audio file in the to-be-played audio file set according to the average play probability, the first play probability, and the second play probability may include: calculating, by the audio play apparatus, the play probability sum of the audio file in the to-be-played audio file set in the following manner:

$$SUM = 1/n + a + b,$$

where SUM represents the play probability sum of the audio file in the to-be-played audio file set, 1/n represents the average play probability, a represents the first play probability of the first audio file, and b represents the second play probability of the second audio file.

In this embodiment, the audio play apparatus may use the formula SUM=1/n+a+b to calculate the play probability sum of the audio file in the to-be-played audio file set.

In the formula, SUM represents the play probability sum of the audio file in the to-be-played audio file set, 1/n represents the average play probability, a represents the first play probability of the first audio file, and b represents the second play probability of the second audio file.

For example, there are a total of 100 identifiers in the to-be-played audio file set. Therefore, the average play probability is 1/100. It is assumed that the first play probability of the first audio file is 2/100 and the second play probability of the second audio file is 5/100. In this case, SUM=1/100+2/100+5/100=7/100 can be obtained by means of calculation. During random play, a target random probability needs to be randomly selected. A value range of the target random probability is 1/100≤the target random probability<7/100. The play probability of the audio file in the to-be-played audio file set is determined according to the target random probability, and a corresponding audio file may be played according to the play probability.

Still further, in this embodiment of the present invention, a specific method for calculating, by the audio play apparatus, the play probability sum of the audio file in the to-be-played audio file set is provided. The play probability sum can be obtained by means of calculation by using the formula, and is applied to subsequent data processing. This improves operability and practicality of the solution.

Optionally, on a basis of the fifth embodiment corresponding to the foregoing FIG. 1, in a sixth optional embodiment of the audio file play control method provided in the embodiments of the present invention, the obtaining, by the audio play apparatus, a target random probability according to the average play probability and the play probability sum may include:
randomly obtaining, by the audio play apparatus, the target random probability according to the following range:

$$1/n \leq k \leq SUM,$$

where 1/n represents the average play probability, SUM represents the play probability sum of the audio file in the to-be-played audio file set, and k represents the target random probability.

In this embodiment, before obtaining the target random probability, the audio play apparatus should first determine a range within which the target random probability falls. Not every randomly selected numerical value can be used as the target random probability. In the random play mode, the target random probability k should be within a reasonable range, that is, be greater than or equal to the average play probability 1/n and less than or equal to the play probability sum SUM.

Still further, in this embodiment of the present invention, the range from which the target random probability is randomly obtained is limited, and the range should be greater than or equal to the average play probability and less than or equal to the play probability sum. Selecting the target random probability from the range can ensure properness of the finally calculated play probability of the audio file. This improves practicality and operability of the solution.

Optionally, on a basis of the sixth embodiment corresponding to the foregoing FIG. 1, in a seventh optional embodiment of the audio file play control method provided in the embodiments of the present invention, the playing, by the audio play apparatus, the audio file according to the play probability of the audio file includes:

when k=1/n, selecting, by the audio play apparatus, an audio file whose play probability is the average play probability, to play the audio file;
when 1/n<k≤(1/n+a), selecting, by the audio play apparatus, the first audio file whose play probability is the first play probability, to play the first audio file; or
when (1/n+a)<k≤SUM, selecting, by the audio play apparatus, the second audio file whose play probability is the second play probability, to play the second audio file.

In this embodiment, based on the sixth optional embodiment of the audio file play control method provided in the embodiments of the present invention, the audio play apparatus randomly selects a number from the range that is greater than or equal to the average play probability 1/n and less than or equal to the play probability sum SUM, as the target random probability. If the selected target random probability happens to be equal to the average play probability, the audio play apparatus randomly selects an audio file from the to-be-played audio file set at an equal probability, to play the audio file. In other words, when the target random probability k = the average play probability 1/n, the audio play apparatus selects the audio file whose play probability is the average play probability, to play the audio file.

In addition, when the target random probability is not equal to the average play probability, two ranges may be divided. A first range is 1/n<k≤(1/n+a), and a second range is (1/n+a)<k≤SUM. When the target random probability k falls within the first range, the audio play apparatus selects the first audio file whose play probability is the first play probability, to play the first audio file. When the target random probability k falls within the second range, the audio play apparatus selects the second audio file whose play probability is the second play probability, to play the second audio file.

It should be noted that, in actual application, a third audio file whose play probability is a third play probability or more audio files with different play probabilities may also be in the to-be-played audio file set. However, this does not affect determining of the to-be-played audio file, and the range method that is used may still be applicable. This is not limited herein.

For ease of description, descriptions may still be provided according to the specific scenario mentioned in the sixth optional embodiment in the embodiments of the present invention. That is, it is assumed that there are a total of 100 identifiers in the to-be-played audio file set. In this case, a default average play probability is 1/100. The user preference information is classified into five levels. If a highest-level probability is 5/100, the first level may be 1/100, the second level is 2/100, the third level is 3/100, the fourth level is 4/100, and the fifth level is 5/100. Levels of an audio file A and an audio file B are both the second level, and a first play probability of the audio file A or the audio file B is a probability of 2/100. Levels of an audio file C and an audio file D are both the fifth level, and a second play probability of the audio file C or the audio file D is a probability of 5/100. The first play probability 2/100 is less than the second play probability 5/100.

Then, the play probability sum of the audio file in the to-be-played audio file set is calculated according to the foregoing probabilities, and the following value range of the target random probability can be obtained: $1/100 \leq$ the target random probability $\leq 7/100$.

The foregoing describes a case in which the target random probability is equal to the average play probability. When k=1/n, the audio play apparatus selects the audio file whose play probability is the average play probability, to play the audio file. The following describes another case, which is specifically as follows:

A preset play probability is calculated first. Grouping may be performed according to different play probabilities to obtain three groups, namely, a group whose play probability is the average play probability, a group whose play probability is equal to a first play probability, and a group whose play probability is equal to a second play probability. In this case, the preset play probability may be set to (1/n+a), where 1/n is the average play probability and is 1/100, and a is the first play probability and is 2/100. Therefore, the preset play probability (1/n+a) is equal to 3/100.

Then, a range within which the target random probability falls is determined. When 1/100<the target random probability$\leq$3/100, the audio play apparatus randomly selects, at an equal probability, an audio file whose play probability is the first play probability from the to-be-played audio file set, to play the audio file. With reference to the specific scenario, the audio file that can be randomly played is the audio file A or the audio file B.

When 3/100<the target random probability$\leq$7/100, the audio play apparatus randomly selects, at an equal probability, an audio file whose play probability is the second play probability from the to-be-played audio file set, to play the audio file. With reference to the specific scenario, the audio file that can be randomly played is the audio file C or the audio file D.

It should be noted that, when audio files are divided into more than three groups according to probabilities, the preset play probability has at least two values. For example, the average play probability is 1/n, a probability corresponding to an audio file A and an audio file B is a, a probability corresponding to an audio file C and an audio file D is b, a probability of an audio file E and an audio file F is c, and a<b<c. In this case, the preset play probability is (1/n+a) and (1/n+b), and the value range of the target random probability k may be divided into three sections: 1/n<k$\leq$(1/n+a), (1/n+a)<k$\leq$(1/n+a+b), and (1/n+a+b)<k$\leq$SUM. The rest may be deduced by analogy. If there are more different probabilities of audio files, the foregoing method is also used for calculation. Details are not described herein.

Still further, in this embodiment of the present invention, a method for randomly playing an audio file when the target random probability is equal to the average play probability is described. When the target random probability is equal to the average play probability, the audio play apparatus randomly selects, at an equal probability, the audio file whose play probability is the average play probability from the to-be-played audio file set, to play the audio file. The foregoing manner provides a corresponding processing manner and resolving approach for specific implementation of the solution, and therefore improves feasibility and practicality of the solution. A method for randomly playing an audio file when the target random probability is not equal to the average play probability is described as follows: When the target random probability is greater than the average play probability and is less than or equal to the sum of the average play probability and the first play probability, the audio play apparatus selects the audio file whose play probability is the first play probability from the to-be-played audio file set, to play the audio file; when the target random probability is greater than the sum of the average play probability and the first play probability and is less than or equal to the play probability sum, the audio play apparatus selects the audio file whose play probability is the second play probability from the to-be-played audio file set, to play the audio file.

The foregoing manner further provides a corresponding processing manner and resolving approach for specific implementation of the solution, and therefore further improves feasibility and practicality of the solution.

Optionally, on a basis of the foregoing FIG. 1 and any one of the first to the seventh embodiments corresponding to FIG. 1, in an eighth optional embodiment of the audio file play control method provided in the embodiments of the present invention, before the obtaining, by an audio play apparatus, identification information corresponding to an audio file, the method further includes:

obtaining, by the audio play apparatus, a flag bit in the audio file, where the flag bit includes a first flag bit or a second flag bit; and

the playing, by the audio play apparatus, the audio file according to the play probability of the audio file may include:

when the flag bit in the audio file is the first flag bit, playing, by the audio play apparatus, the audio file according to the play probability of the audio file.

In this embodiment, before playing a next audio file, the audio play apparatus further needs to obtain flag bits of all the audio files. The flag bit includes the first flag bit and the second flag bit, and the audio play apparatus plays only an audio file whose flag bit is the first flag bit.

Specifically, when one to-be-played audio file set includes at least two audio files, using the method described in this embodiment can ensure that a same audio file is not successively played twice. Firstly, each audio file has a flag bit (English full name: flag). The flag bit may be represented by "0" and "1". "0" is the first flag bit. When a flag bit of an audio file is "0", it indicates that a previously played audio file is not the audio file. "1" is the second flag bit. When a flag bit of an audio file is "1", it indicates that the audio file is just played at a previous time. The audio play apparatus selects, according to a play probability, an audio file only from an audio file whose flag bit is "0", to play the audio file.

It can be understood that the audio play apparatus may first obtain a flag bit of each audio file and then determine, according to a play probability, a to-be-played-next audio file from an audio file whose flag bit is the first flag bit. Certainly, the audio play apparatus may alternatively first select a to-be-played-next audio file according to a play probability, then determine whether a flag bit of the to-be-played audio file is the first flag bit, and if yes, determine to play the audio file, or if the flag bit of the to-be-played audio file is the second flag bit, reselect a to-be-played audio file from an audio file whose flag bit is the first flag bit.

It should be noted that there are multiple manners used for representing the first flag bit and the second flag bit. In addition to "0" and "1", the first flag bit and the second flag bit may alternatively be represented by using English letters, for example, "T" and "F", or be represented by using English words, for example, "true" and "false", or be represented by using symbols, for example, "+" and "-". This is not limited herein.

Moreover, in this embodiment of the present invention, to prevent a same audio file from being successively played twice, the flag bit of the to-be-played audio file may be obtained first, and then, the audio play apparatus selects the audio file whose flag bit is the first flag bit, and determines the to-be-played-next audio file according to the play probability of the audio file. If the flag bit is the first flag bit, it indicates that the audio file can be played, because the audio file is not a previously played audio file. Conversely, if the flag bit is the second flag bit, it indicates that the audio file corresponding to the second flag bit is just played, and the audio file is not considered for a next play. This ensures that a same audio file is not played twice or even more than twice, so that the user gets a fresh feeling psychologically. This helps improve user experience.

Optionally, on a basis of the eighth embodiment corresponding to the foregoing FIG. 1, in a ninth optional embodiment of the audio file play control method provided in the embodiments of the present invention, the method may further include:

when a third audio file is played, updating, by the audio play apparatus, the first flag bit in the third audio file to the second flag bit.

In this embodiment, the audio play apparatus determines, according to the play probability of the audio file and from the audio file whose flag bit is the first flag bit, that the to-be-played-next audio file is the third audio file. When the third audio file is being played, at a moment when play starts, the audio play apparatus updates the first flag bit corresponding to the third audio file to the second flag bit.

Therefore, when play of the third audio file is completed, or when the user switches from the third audio file, a to-be-played-next audio file is selected from an audio file excluding the third audio file. The to-be-played-next audio file still needs to be selected according to the probability of the audio file.

Moreover, in this embodiment of the present invention, a method for recovering the flag bit in a timely manner is provided. When the audio play apparatus determines, from the audio file whose flag bit is the first flag bit and according to the play probability of the audio file, that the to-be-played-next audio file is the third audio file, at a moment when the third audio file is started, the audio play apparatus updates the first flag bit originally corresponding to the third audio file to the second flag bit. In this way, if the user frequently performs audio file switching within a short time, it can still be ensured that the audio play apparatus doe not successively play a same audio file repeatedly. This further improves user experience.

For ease of understanding, the following describes in detail the audio file play control method in this embodiment of the present invention by using a specific application scenario, specifically as follows:

An audio player on a mobile phone of a user Xiaoli has a random playlist, and the playlist includes seven songs. Xiaoli is recently fascinated with listening to songs, especially piano pieces. Therefore, Xiaoli recently adds three piano pieces to his random playlist. The three piano pieces are Mariage D'Amour by Richard Clayderman, An Der Schonen Blauen Donau - Walzer, Op.314 by Johann Strauss Jr., and Dance of the Cygnets by Pyotr Ilyich Tchaikovsky. Xiaoli sets, according to his preference, user preference information for each of the three songs by using a music player interface. There are a total of five levels of preference degrees in the music player interface. Four stars is set for Mariage D'Amour, and five stars is set for both An Der Schonen Blauen Donau - Walzer, Op.314 and Dance of the Cygnets. Each time when Xiaoli exits the music player interface, Xiaoli is notified of user preference information of a current song by a beep sound. For example, the beep sound is played four times before Mariage D'Amour is played.

Xiaoli does not perform setting on the other seven songs. Therefore, the seven songs have a default play probability. When random play processing is performed in the background, identification information of each song is obtained first. The identification information is as follows:

Identification information of a song A is {1}.
Identification information of a song B is {2}.
Identification information of a song C is {3}.
Identification information of a song D is {4}.
Identification information of a song E is {5}.
Identification information of a song F is {6}.
Identification information of a song G is {7}.
Identification information of the song Mariage D'Amour is {8,9,10,11}.
Identification information of the song Dance of the Cygnets is {12,13,14,15,16}.
Identification information of the song An Der Schonen Blauen Donau - Walzer, Op.314 is {17,18,19,20,21}.

Then, a numerical value is randomly generated from identifier values 1 to 21. Then, a song including the numerical value is searched for, and the song that is found is played. At this time, the randomly selected numerical value is 15, that is, Dance of the Cygnets is played to the user Xiaoli.

A flag bit of the song is set to true. Therefore, at a next time, a random number is generated from numerical values other than 12 to 16, and a song including the numerical value is searched for and played.

Therefore, a larger quantity of identifiers indicates a higher probability of being corresponding to a generated random number and a greater quantity of play times.

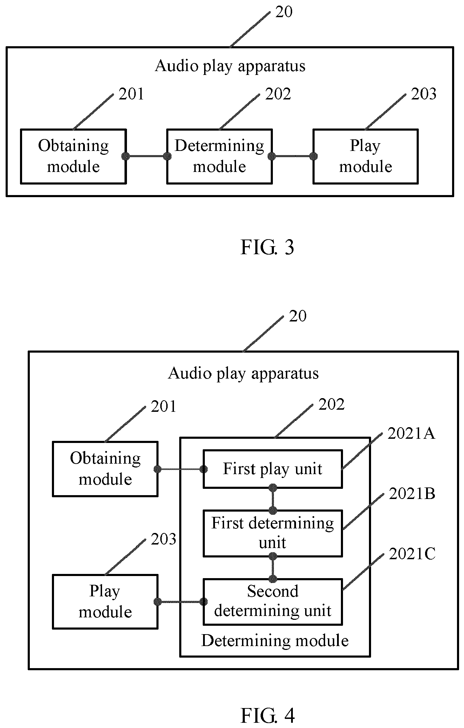

The following describes in detail an audio play apparatus in the present invention. Referring to FIG. 3, the audio play apparatus in this embodiment of the present invention includes:

an obtaining module 201, configured to obtain identification information corresponding to an audio file;
a determining module 202, configured to determine a play probability of the audio file according to the identification information, obtained by the obtaining module 201, corresponding to the audio file; and
a play module 203, configured to play the audio file according to the play probability, determined by the determining module 202, of the audio file.

In this embodiment, the obtaining module 201 obtains the identification information corresponding to the audio file. The determining module 202 determines the play probability of the audio file according to the identification information, obtained by the obtaining module 201, corresponding to the audio file. The play module 203 plays the audio file according to the play probability, determined by the determining module 202, of the audio file.

In this embodiment of the present invention, audio file play control method is provided. The audio play apparatus obtains the identification information corresponding to the audio file, determines the play probability of the audio file according to the identification information corresponding to the audio file, and finally plays the audio file according to the play probability of the audio file. In this way, a quantity of play times of the audio file is determined in a random play mode according to the identification information corresponding to the audio file, that is, according to a degree to which a user likes the audio file, with no need to play multiple audio files at an equal probability. This improves user experience and increases solution flexibility.

Optionally, on a basis of the embodiment corresponding to the foregoing FIG. 3, in another embodiment of the audio play apparatus provided in the embodiments of the present invention, a play mode of the audio play apparatus is the random play mode.

Moreover, in this embodiment of the present invention, the play mode of the audio play apparatus is limited to the random play mode. In the prior art, each audio file has a same play probability when the random play mode is used. However, in the present invention, the quantity of play times of the audio file can be determined in the random play mode according to the identification information corresponding to the audio file. Therefore, user experience is further improved, and solution flexibility is increased.

Optionally, on a basis of the embodiment corresponding to the foregoing FIG. 3, in another embodiment of the audio play apparatus provided in the embodiments of the present invention, the identification information includes an identifier value and a quantity of identifiers.

Moreover, in this embodiment of the present invention, the identification information includes the identifier value and the quantity of identifiers, and is specifically represented as user preference information. The audio play apparatus receives the user preference information of the user for the audio file, and plays, according to the user preference information, a play probability prompt tone corresponding to the audio file. According to the foregoing solution, the identifier value and the quantity of identifiers included in the identification information may be determined, so that the audio play apparatus can determine the play probability of the audio file according to the identifier value and the quantity of identifiers. Meanwhile, if the play probability prompt tone corresponding to the audio file can also be played, the user can learn the probability of the audio file, with no need to view a music player interface. This improves practicality and flexibility of the solution when it is inconvenient for the user to view the music player interface, and the user can conveniently adjust the probability of the current audio file in real time, thereby enhancing user experience of the solution.

Referring to FIG. 4, another embodiment of an audio play apparatus in the embodiments of the present invention includes:

an obtaining module 201, configured to obtain identification information corresponding to an audio file;
a determining module 202, configured to determine a play probability of the audio file according to the identification information, obtained by the obtaining module 201, corresponding to the audio file; and
a play module 203, configured to play the audio file according to the play probability, determined by the determining module 202, of the audio file.

The determining module 202 includes:

a first play unit 2021A, configured to play a to-be-played audio file set constituted by at least one audio file;
a first determining unit 2021B, configured to determine an average play probability of the audio file according to a total quantity of identifiers in the to-be-played audio file set played by the first play unit 2021A; and
a second determining unit 2021C, configured to determine the play probability of the audio file in the to-be-played audio file set according to the quantity of identifiers of the audio file and the average play probability that is determined by the first determining unit 2021B.

Further, in this embodiment of the present invention, the audio play apparatus determines a quantity of audio files in the to-be-played audio file set. The to-be-played audio file set is constituted by at least one audio file. Then, the audio play apparatus determines the average play probability of the audio file according to the total quantity of identifiers in the to-be-played audio file set, and finally determines the play probability of the audio file in the to-be-played audio file set according to the quantity of identifiers of the audio file and the average play probability. According to the foregoing method, the audio play apparatus can determine the play probability of the audio file. This provides a specific resolving approach for specific implementation of the solution, and therefore improves practicality and flexibility of the solution.

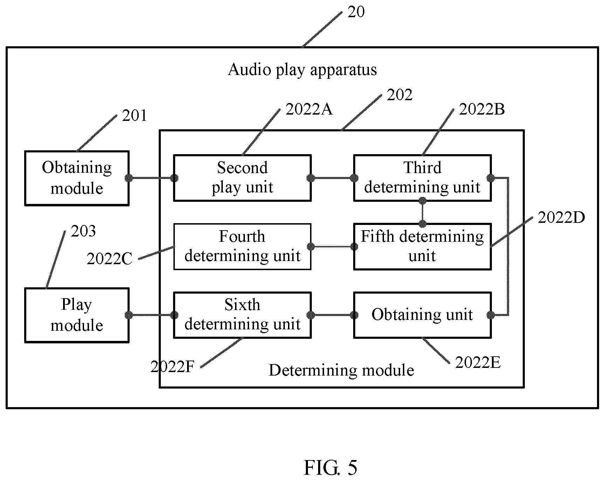

Referring to FIG. 5, another embodiment of an audio play apparatus in the embodiments of the present invention includes:

an obtaining module 201, configured to obtain identification information corresponding to an audio file;
a determining module 202, configured to determine a play probability of the audio file according to the identification information, obtained by the obtaining module 201, corresponding to the audio file; and
a play module 203, configured to play the audio file according to the play probability, determined by the determining module 202, of the audio file.

The determining module 202 includes:

a second play unit 2022A, configured to play a to-be-played audio file set constituted by at least one audio file;
a third determining unit 2022B, configured to determine an average play probability of the audio file according to a total quantity of identifiers in the to-be-played audio file set played by the second play unit 2022A;
a fourth determining unit 2022C, configured to determine a first play probability according to a quantity of identifiers in identification information of a first audio file, and determine a second play probability according to a quantity of identifiers in identification information of a second audio file, where both the first audio file and the second audio file are audio files in the to-be-played audio file set, the quantity of identifiers in the identification information of the first audio file is greater than or equal to 2, and the quantity of identifiers in the identification information of the second audio file is greater than the quantity of identifiers in the identification information of the first audio file;
a fifth determining unit 2022D, configured to determine a play probability sum of the audio file in the to-be-played audio file set according to the average play probability determined by the third determining unit 2022B and the first play probability and the second play probability that are determined by the fourth determining unit 2022C;
an obtaining unit 2022E, configured to obtain a target random probability according to the average play probability determined by the third determining unit 2022B and the play probability sum determined by the fifth determining unit 2022D; and
a sixth determining unit 2022F, configured to determine the play probability of the audio file in the to-be-played audio file set according to the target random probability obtained by the obtaining unit 2022E.

Further, in this embodiment of the present invention, another audio file play control method is provided. The audio play apparatus plays the to-be-played audio file set constituted by the at least one audio file. The audio play apparatus first determines the average play probability of the audio file according to the total quantity of identifiers in the to-be-played audio file set, then determines the first play probability according to the quantity of identifiers in the identification information of the first audio file, determines the second play probability according to the quantity of identifiers in the identification information of the second audio file, and finally determines the play probability sum of the audio file in the to-be-played audio file set according to the average play probability, the first play probability, and the second play probability. The audio play apparatus may obtain the target random probability according to the average play probability and the play probability sum, and determine the play probability of the audio file in the to-be-played audio file set according to the target random probability. Selecting a to-be-played audio file in the foregoing manner provides another specific implementation approach for the solution of the present invention, and this improves flexibility and practicality of the solution.

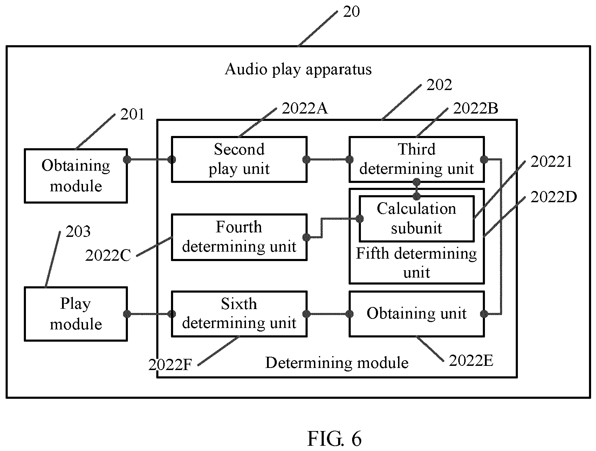

Referring to FIG. 6, another embodiment of an audio play apparatus in the embodiments of the present invention includes:

> an obtaining module 201, configured to obtain identification information corresponding to an audio file;
> a determining module 202, configured to determine a play probability of the audio file according to the identification information, obtained by the obtaining module 201, corresponding to the audio file; and
> a play module 203, configured to play the audio file according to the play probability, determined by the determining module 202, of the audio file.

The determining module 202 includes:

> a second play unit 2022A, configured to play a to-be-played audio file set constituted by at least one audio file;
> a third determining unit 2022B, configured to determine an average play probability of the audio file according to a total quantity of identifiers in the to-be-played audio file set played by the second play unit 2022A;
> a fourth determining unit 2022C, configured to determine a first play probability according to a quantity of identifiers in identification information of a first audio file, and determine a second play probability according to a quantity of identifiers in identification information of a second audio file, where both the first audio file and the second audio file are audio files in the to-be-played audio file set, the quantity of identifiers in the identification information of the first audio file is greater than or equal to 2, and the quantity of identifiers in the identification information of the second audio file is greater than the quantity of identifiers in the identification information of the first audio file;
> a fifth determining unit 2022D, configured to determine a play probability sum of the audio file in the to-be-played audio file set according to the average play probability determined by the third determining unit 2022B and the first play probability and the second play probability that are determined by the fourth determining unit 2022C;
> an obtaining unit 2022E, configured to obtain a target random probability according to the average play probability determined by the third determining unit 2022B and the play probability sum determined by the fifth determining unit 2022D; and
> a sixth determining unit 2022F, configured to determine the play probability of the audio file in the to-be-played audio file set according to the target random probability obtained by the obtaining unit 2022E.

The fifth determining unit 2022D includes:
a calculation subunit 20221, configured to calculate the play probability sum of the audio file in the to-be-played audio file set in the following manner:

$$SUM = 1/n + a + b,$$

where SUM represents the play probability sum of the audio file in the to-be-played audio file set, 1/n represents the average play probability, a represents the first play probability of the first audio file, and b represents the second play probability of the second audio file.

Still further, in this embodiment of the present invention, a specific method for calculating, by the audio play apparatus, the play probability sum of the audio file in the to-be-played audio file set is provided. The play probability sum can be obtained by means of calculation by using the formula, and is applied to subsequent data processing. This improves operability and practicality of the solution.

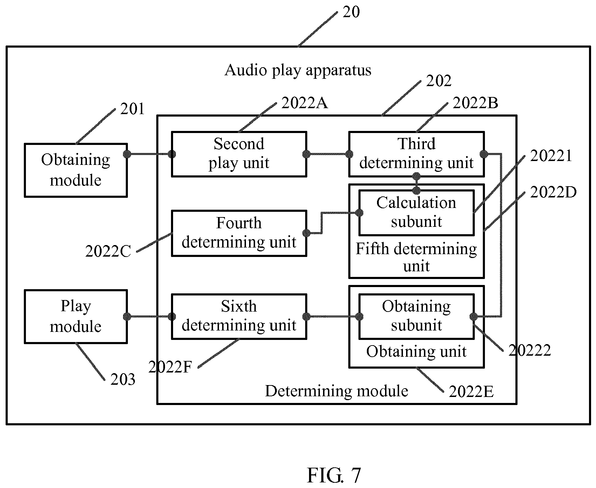

Referring to FIG. 7, another embodiment of an audio play apparatus in the embodiments of the present invention includes:

> an obtaining module 201, configured to obtain identification information corresponding to an audio file;
> a determining module 202, configured to determine a play probability of the audio file according to the identification information, obtained by the obtaining module 201, corresponding to the audio file; and
> a play module 203, configured to play the audio file according to the play probability, determined by the determining module 202, of the audio file.

The determining module 202 includes:

> a second play unit 2022A, configured to play a to-be-played audio file set constituted by at least one audio file;
> a third determining unit 2022B, configured to determine an average play probability of the audio file according to a total quantity of identifiers in the to-be-played audio file set played by the second play unit 2022A;

a fourth determining unit 2022C, configured to determine a first play probability according to a quantity of identifiers in identification information of a first audio file, and determine a second play probability according to a quantity of identifiers in identification information of a second audio file, where both the first audio file and the second audio file are audio files in the to-be-played audio file set, the quantity of identifiers in the identification information of the first audio file is greater than or equal to 2, and the quantity of identifiers in the identification information of the second audio file is greater than the quantity of identifiers in the identification information of the first audio file;

a fifth determining unit 2022D, configured to determine a play probability sum of the audio file in the to-be-played audio file set according to the average play probability determined by the third determining unit 2022B and the first play probability and the second play probability that are determined by the fourth determining unit 2022C;

an obtaining unit 2022E, configured to obtain a target random probability according to the average play probability determined by the third determining unit 2022B and the play probability sum determined by the fifth determining unit 2022D; and

a sixth determining unit 2022F, configured to determine the play probability of the audio file in the to-be-played audio file set according to the target random probability obtained by the obtaining unit 2022E.

The fifth determining unit 2022D includes:

a calculation subunit 20221, configured to calculate the play probability sum of the audio file in the to-be-played audio file set in the following manner:

$$SUM=1/n+a+b,$$

where SUM represents the play probability sum of the audio file in the to-be-played audio file set, 1/n represents the average play probability, a represents the first play probability of the first audio file, and b represents the second play probability of the second audio file.

The obtaining unit 2022E includes:

an obtaining subunit 20222, configured to randomly obtain the target random probability according to the following range:

$$1/n \leq k \leq SUM,$$

where 1/n represents the average play probability, SUM represents the play probability sum of the audio file in the to-be-played audio file set, and k represents the target random probability.

Still further, in this embodiment of the present invention, the range from which the target random probability is randomly obtained is limited, and the range should be greater than or equal to the average play probability and less than or equal to the play probability sum. Selecting the target random probability from the range can ensure properness of the finally calculated play probability of the audio file. This improves practicality and operability of the solution.

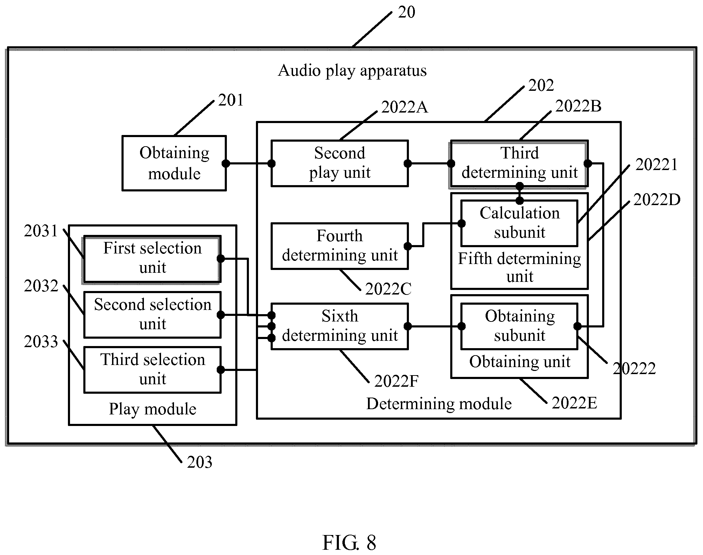

Referring to FIG. 8, another embodiment of an audio play apparatus in the embodiments of the present invention includes:

an obtaining module 201, configured to obtain identification information corresponding to an audio file;

a determining module 202, configured to determine a play probability of the audio file according to the identification information, obtained by the obtaining module 201, corresponding to the audio file; and

a play module 203, configured to play the audio file according to the play probability, determined by the determining module 202, of the audio file.

The determining module 202 includes:

a second play unit 2022A, configured to play a to-be-played audio file set constituted by at least one audio file;

a third determining unit 2022B, configured to determine an average play probability of the audio file according to a total quantity of identifiers in the to-be-played audio file set played by the second play unit 2022A;

a fourth determining unit 2022C, configured to determine a first play probability according to a quantity of identifiers in identification information of a first audio file, and determine a second play probability according to a quantity of identifiers in identification information of a second audio file, where both the first audio file and the second audio file are audio files in the to-be-played audio file set, the quantity of identifiers in the identification information of the first audio file is greater than or equal to 2, and the quantity of identifiers in the identification information of the second audio file is greater than the quantity of identifiers in the identification information of the first audio file;

a fifth determining unit 2022D, configured to determine a play probability sum of the audio file in the to-be-played audio file set according to the average play probability determined by the third determining unit 2022B and the first play probability and the second play probability that are determined by the fourth determining unit 2022C;

an obtaining unit 2022E, configured to obtain a target random probability according to the average play probability determined by the third determining unit 2022B and the play probability sum determined by the fifth determining unit 2022D; and
a sixth determining unit 2022F, configured to determine the play probability of the audio file in the to-be-played audio file set according to the target random probability obtained by the obtaining unit 2022E.

The fifth determining unit 2022D includes:
a calculation subunit 20221, configured to calculate the play probability sum of the audio file in the to-be-played audio file set in the following manner:

$$SUM = 1/n + a + b,$$

where SUM represents the play probability sum of the audio file in the to-be-played audio file set, 1/n represents the average play probability, a represents the first play probability of the first audio file, and b represents the second play probability of the second audio file.

The obtaining unit 2022E includes:
an obtaining subunit 20222, configured to randomly obtain the target random probability according to the following range:

$$1/n \leq k \leq SUM,$$

where 1/n represents the average play probability, SUM represents the play probability sum of the audio file in the to-be-played audio file set, and k represents the target random probability.

The play module 203 includes:

a first selection unit 2031, configured to: when k=1/n, select an audio file whose play probability is the average play probability, to play the audio file;
a second selection unit 2032, configured to: when $1/n < k \leq (1/n+a)$, select the first audio file whose play probability is the first play probability, to play the first audio file; and
a third selection unit 2033, configured to: when $(1/n+a) < k \leq SUM$, select the second audio file whose play probability is the second play probability, to play the second audio file.

Still further, in this embodiment of the present invention, a method for randomly playing an audio file when the target random probability is equal to the average play probability is described. When the target random probability is equal to the average play probability, the audio play apparatus randomly selects, at an equal probability, the audio file whose play probability is the average play probability from the to-be-played audio file set, to play the audio file. The foregoing manner provides a corresponding processing manner and resolving approach for specific implementation of the solution, and therefore improves feasibility and practicality of the solution. A method for randomly playing an audio file when the target random probability is not equal to the average play probability is described as follows: When the target random probability is greater than the average play probability and is less than or equal to the sum of the average play probability and the first play probability, the audio play apparatus selects the audio file whose play probability is the first play probability from the to-be-played audio file set, to play the audio file; when the target random probability is greater than the sum of the average play probability and the first play probability and is less than or equal to the play probability sum, the audio play apparatus selects the audio file whose play probability is the second play probability from the to-be-played audio file set, to play the audio file. The foregoing manner further provides a corresponding processing manner and resolving approach for specific implementation of the solution, and therefore further improves feasibility and practicality of the solution.

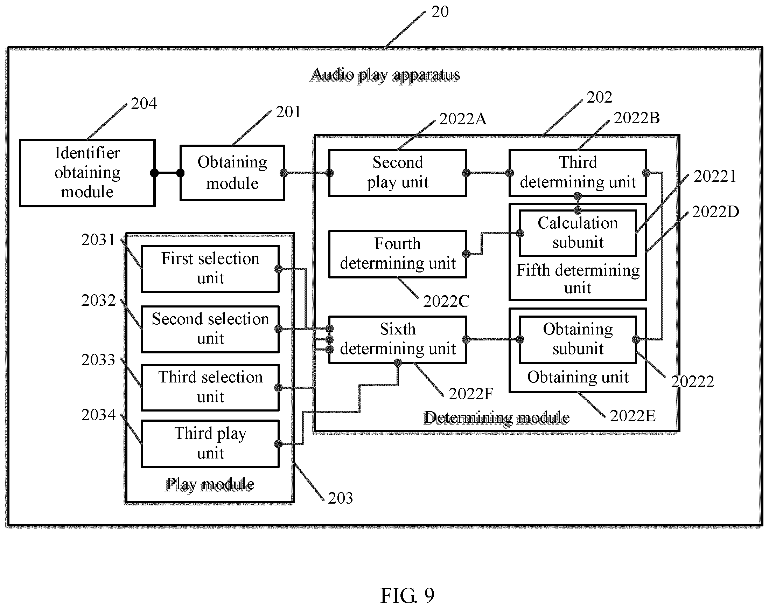

Referring to FIG. 9, another embodiment of an audio play apparatus in the embodiments of the present invention includes:

an obtaining module 201, configured to obtain identification information corresponding to an audio file;
a determining module 202, configured to determine a play probability of the audio file according to the identification information, obtained by the obtaining module 201, corresponding to the audio file;
a play module 203, configured to play the audio file according to the play probability, determined by the determining module 202, of the audio file; and
an identifier obtaining module 204, configured to obtain a flag bit in the audio file, where the flag bit includes a first flag bit or a second flag bit.

The determining module 202 includes:

a second play unit 2022A, configured to play a to-be-played audio file set constituted by at least one audio file;
a third determining unit 2022B, configured to determine an average play probability of the audio file according to a total quantity of identifiers in the to-be-played audio file set played by the second play unit 2022A;
a fourth determining unit 2022C, configured to determine a first play probability according to a quantity of identifiers in identification information of a first audio file, and determine a second play probability according to a quantity of identifiers in identification information of a second audio file, where both the first audio file and the second audio file are audio files in the to-be-played audio file set, the quantity of identifiers in the identification information of the first audio file is greater than or equal to 2, and the quantity of identifiers in the identification information of the second audio file is greater than the quantity of identifiers in the identification information of the first audio file; a fifth determining unit 2022D, configured to determine a play probability sum of the audio file in the to-be-played audio file set according to the average play probability determined by the third determining unit 2022B and the first play probability and the second play probability that are determined by the fourth determining unit 2022C; an obtaining unit 2022E, configured to obtain a target random probability according to the average play probability determined by the third determining unit 2022B and the play probability sum determined by the fifth determining unit 2022D; and a sixth determining unit 2022F, configured to determine the play probability of the audio file in the to-be-played audio file set according to the target random probability obtained by the obtaining unit 2022E.

The fifth determining unit 2022D includes:
a calculation subunit 20221, configured to calculate the play probability sum of the audio file in the to-be-played audio file set in the following manner:

$$SUM = 1/n + a + b,$$

where SUM represents the play probability sum of the audio file in the to-be-played audio file set, 1/n represents the average play probability, a represents the first play probability of the first audio file, and b represents the second play probability of the second audio file.

The obtaining unit 2022E includes:
an obtaining subunit 20222, configured to randomly obtain the target random probability according to the following range:

$$1/n \leq k \leq SUM,$$

where 1/n represents the average play probability, SUM represents the play probability sum of the audio file in the to-be-played audio file set, and k represents the target random probability.

The play module 203 includes:

a first selection unit 2031, configured to: when k=1/n, select an audio file whose play probability is the average play probability, to play the audio file;
a second selection unit 2032, configured to: when 1/n<k≤(1/n+a), select the first audio file whose play probability is the first play probability, to play the first audio file;
a third selection unit 2033, configured to: when (1/n+a)<k≤SUM, select the second audio file whose play probability is the second play probability, to play the second audio file; and
a third play unit 2034, configured to play the audio file according to the play probability of the audio file when the flag bit in the audio file is the first flag bit.

Moreover, in this embodiment of the present invention, to prevent a same audio file from being successively played twice, the flag bit of the to-be-played audio file may be obtained first, and then, the audio play apparatus selects the audio file whose flag bit is the first flag bit, and determines the to-be-played-next audio file according to the play probability of the audio file. If the flag bit is the first flag bit, it indicates that the audio file can be played, because the audio file is not a previously played audio file. Conversely, if the flag bit is the second flag bit, it indicates that the audio file corresponding to the second flag bit is just played, and the audio file is not considered for a next play. This ensures that a same audio file is not played twice or even more than twice, so that the user gets a fresh feeling psychologically. This helps improve user experience.

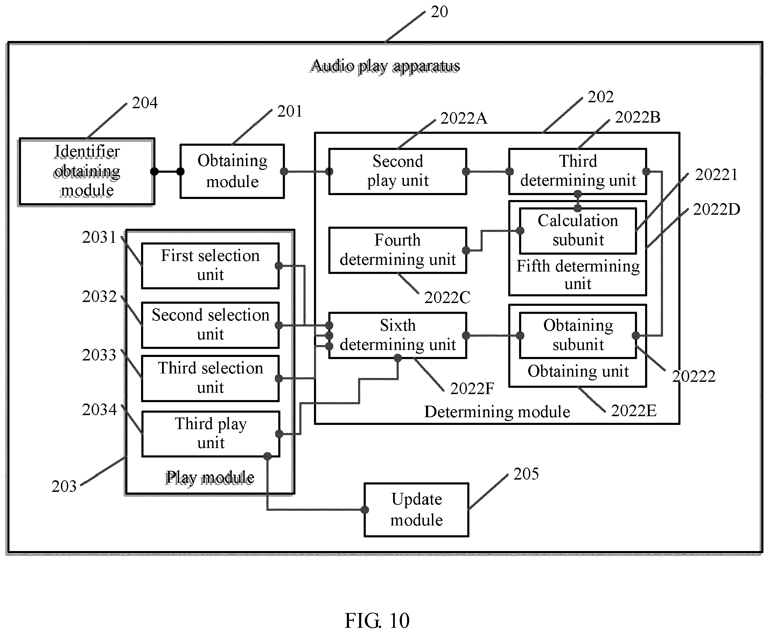

Referring to FIG. 10, another embodiment of an audio play apparatus in the embodiments of the present invention includes:

an obtaining module 201, configured to obtain identification information corresponding to an audio file;
a determining module 202, configured to determine a play probability of the audio file according to the identification information, obtained by the obtaining module 201, corresponding to the audio file;
a play module 203, configured to play the audio file according to the play probability, determined by the determining module 202, of the audio file;
an identifier obtaining module 204, configured to obtain a flag bit in the audio file, where the flag bit includes a first flag bit or a second flag bit; and
an update module 205, configured to: when a third audio file is played, update the first flag bit in the third audio file to the second flag bit.

The determining module 202 includes:

a second play unit 2022A, configured to play a to-be-played audio file set constituted by at least one audio file;
a third determining unit 2022B, configured to determine an average play probability of the audio file according to a total quantity of identifiers in the to-be-played audio file set played by the second play unit 2022A;
a fourth determining unit 2022C, configured to determine a first play probability according to a quantity of identifiers in identification information of a first audio file, and determine a second play probability according to a quantity of identifiers in identification information of a second audio file, where both the first audio file and the second audio file are audio files in the to-be-played audio file set, the quantity of identifiers in the identification information of the first audio file is greater than or equal to 2, and the quantity of identifiers in the identification information of the second audio file is greater than the quantity of identifiers in the identification information of the first audio file; a fifth determining unit 2022D, configured to determine a play probability sum of the audio file in the to-be-played audio file set according to the average play probability determined by the third determining unit 2022B and the first play probability and the second play probability that are determined by the fourth determining unit 2022C; an obtaining unit 2022E, configured to obtain a target random probability according to the average play probability determined by the third determining unit 2022B and the play probability sum determined by the fifth determining unit 2022D; and a sixth determining unit 2022F, configured to determine the play probability of the audio file in the to-be-played audio file set according to the target random probability obtained by the obtaining unit 2022E.

The fifth determining unit 2022D includes: a calculation subunit 20221, configured to calculate the play probability sum of the audio file in the to-be-played audio file set in the following manner:

$$SUM = 1/n + a + b,$$

where SUM represents the play probability sum of the audio file in the to-be-played audio file set, 1/n represents the average play probability, a represents the first play probability of the first audio file, and b represents the second play probability of the second audio file.
The obtaining unit 2022E includes: an obtaining subunit 20222, configured to randomly obtain the target random probability according to the following range:

$$1/n \leq k \leq SUM,$$

where 1/n represents the average play probability, SUM represents the play probability sum of the audio file in the to-be-played audio file set, and k represents the target random probability.
The play module 203 includes:

a first selection unit 2031, configured to: when k=1/n, select an audio file whose play probability is the average play probability, to play the audio file; a second selection unit 2032, configured to: when 1/n<k<(1/n+a), select the first audio file whose play probability is the first play probability, to play the first audio file; a third selection unit 2033, configured to: when (1/n+a)<k≤SUM, select the second audio file whose play probability is the second play probability, to play the second audio file; and a third play unit 2034, configured to play the audio file according to the play probability of the audio file when the flag bit in the audio file is the first flag bit.

Moreover, in this embodiment of the present invention, a method for recovering the flag bit in a timely manner is provided. When the audio play apparatus determines, from an audio file whose flag bit is the first flag bit and according to the play probability of the audio file, that the to-be-played-next audio file is the third audio file, at a moment when the third audio file is started, the audio play apparatus updates the first flag bit originally corresponding to the third audio file to the second flag bit. In this way, if the user frequently performs audio file switching within a short time, it can still be ensured that the audio play apparatus doe not successively play a same audio file repeatedly. This further improves user experience.

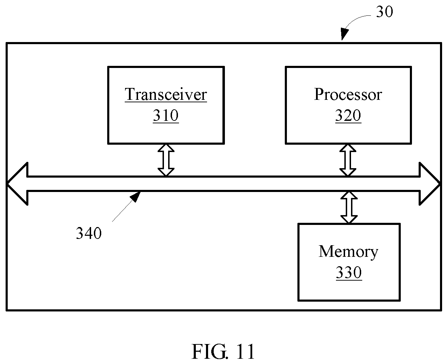

FIG. 11 is a schematic structural diagram of an audio play apparatus 30 according to an embodiment of the present invention. The audio play apparatus 30 may include a transceiver 310, a processor 320, and a memory 330. An output device in the transceiver in this embodiment of the present invention may be a display device. A terminal device related to this embodiment of the present invention may be a device that provides voice and/or data connectivity for a user, a handheld device with a wireless connection function, or another processing device connected to a wireless modem. A wireless terminal may communicate with one or more core networks through a radio access network (English full name: Radio Access Network, RAN for short). The wireless terminal may be a mobile terminal, such as a mobile phone (also referred to as a "cellular" phone) or a computer with a mobile terminal, for example, may be a portable, pocket-sized, handheld, computer built-in, or in-vehicle mobile apparatus, and the mobile apparatus exchanges voice and/or data with the radio access network. For example, the wireless terminal may be a device such as a personal communication service (English full name: Personal Communication Service, PCS for short) phone, a cordless telephone set, a session initiation protocol (English full name: Session Initiation Protocol, SIP for short) phone, a wireless local loop (WLL, Wireless Local Loop) station, or a personal digital assistant (English full name: Personal Digital Assistant, PDA for short). The wireless terminal may also be referred to as a system, a subscriber unit (English full name: Subscriber Unit, SU for short), a subscriber station (English full name: Subscriber Station, SS for short), a mobile station (English full name: Mobile Station, MS for short), a mobile station (English full name: Mobile), a remote station (English full name: Remote Station, RS for short), an access point (English full name:

Access Point, AP for short), a remote terminal (English full name: Remote Terminal, RT for short), an access terminal (English full name: Access Terminal, AT for short), a user terminal (English full name: User Terminal, UT for short), a user agent (English full name: User Agent, UA for short), a user device (English full name: User Device, UD for short), or user equipment (English full name: User Equipment, UE for short).

The memory 330 may include a read-only memory and a random access memory, and provides an instruction and data for the processor 320. A part of the memory 330 may further include a nonvolatile random access memory (English full name: Non-Volatile Random Access Memory, NVRAM for short).

The memory 330 stores the following elements, that is, executable modules or data structures, or subsets thereof, or extended sets thereof:

> an operation instruction: including various operation instructions and used to implement various operations; and
> an operating system: including various system programs and used to implement various basic services and process a hardware-based task.

In this embodiment of the present invention, the processor 320 is configured to:

> control the transceiver 310 to obtain identification information corresponding to an audio file;
> determine a play probability of the audio file according to the identification information corresponding to the audio file; and
> play the audio file according to the play probability of the audio file.

A play mode of the audio play apparatus 20 is a random play mode.

The identification information may include an identifier value and a quantity of identifiers.

The processor 320 controls operation of the audio play apparatus 30. The processor 320 may also be referred to as a central processing unit (English full name: Central Processing Unit, CPU for short). The memory 330 may include the read-only memory and the random access memory, and provides the instruction and data for the processor 320. A part of the memory 330 may further include the nonvolatile random access memory. In specific application, components of the audio play apparatus 30 are coupled to each other by using a bus system 340. In addition to a data bus, the bus system 340 may further include a power bus, a control bus, a status signal bus, and the like. However, for clear description, various buses in the figure are all marked as the bus system 340.

The method disclosed in the foregoing embodiments of the present invention may be applied to the processor 320 or be implemented by the processor 320.

The processor 320 may be an integrated circuit chip and has a signal processing capability. In an implementation process, the steps of the foregoing methods may be completed by using an integrated logic circuit of hardware in the processor 430 or by using an instruction in a form of software. The foregoing processor 320 may be a general purpose processor, a digital signal processor (English full name: Digital Signal Processor, DSP for short), an application-specific integrated circuit (English full name: Application Specific Integrated Circuit, ASIC for short), a field programmable gate array (English full name: Field Programmable Gate Array, FPGA for short) or another programmable logic device, a discrete gate or a transistor logic device, or a discrete hardware component, and can implement or execute the methods, steps, and logical block diagrams disclosed in the embodiments of the present invention. The general purpose processor may be a microprocessor, or the processor may be any conventional processor or the like. The steps of the methods disclosed with reference to the embodiments of the present invention may be directly executed by a hardware decoding processor, or may be executed by using a combination of hardware in a decoding processor and a software module. The software module may be located in a storage medium that is mature in the art, such as a random access memory, a flash memory, a read-only memory, a programmable read-only memory, an electrically erasable programmable memory, or a register. The storage medium is located in the memory 330. The processor 320 reads information in the memory 330, and completes the steps of the foregoing methods in combination with hardware of the processor 320.

Optionally, the processor 320 is specifically configured to:

> play a to-be-played audio file set constituted by at least one audio file;
> determine an average play probability of the audio file according to a total quantity of identifiers in the to-be-played audio file set; and
> determine the play probability of the audio file in the to-be-played audio file set according to the quantity of identifiers of the audio file and the average play probability.

Optionally, the processor 320 is specifically configured to:

> play a to-be-played audio file set constituted by at least one audio file;
> determine an average play probability of the audio file according to a total quantity of identifiers in the to-be-played audio file set;
> determine a first play probability according to a quantity of identifiers in identification information of a first audio file, and determine a second play probability according to a quantity of identifiers in identification information of a second audio file, where both the first audio file and the second audio file are audio files in the to-be-played audio file set, the quantity of identifiers in the identification information of the first audio file is greater than or equal to 2, and the quantity of identifiers in the identification information of the second audio file is greater than the quantity of identifiers in the identification information of the first audio file;

determine a play probability sum of the audio file in the to-be-played audio file set according to the average play probability, the first play probability, and the second play probability;

control, according to the average play probability and the play probability sum, the transceiver 310 to obtain a target random probability; and

determine the play probability of the audio file in the to-be-played audio file set according to the target random probability.

Optionally, the processor 320 is specifically configured to:

calculate the play probability sum of the audio file in the to-be-played audio file set in the following manner:

$$SUM=1/n+a+b,$$

where SUM represents the play probability sum of the audio file in the to-be-played audio file set, 1/n represents the average play probability, a represents the first play probability of the first audio file, and b represents the second play probability of the second audio file.

Optionally, the processor 320 is specifically configured to:

randomly obtain the target random probability according to the following range:

$$1/n \leq k \leq SUM,$$

where 1/n represents the average play probability, SUM represents the play probability sum of the audio file in the to-be-played audio file set, and k represents the target random probability.

Optionally, the processor 320 is specifically configured to:

when k=1/n, select an audio file whose play probability is the average play probability, to play the audio file;

when 1/n<k<(1/n+a), select the first audio file whose play probability is the first play probability, to play the first audio file; or

when (1/n+a)<k≤SUM, select the second audio file whose play probability is the second play probability, to play the second audio file.

Optionally, the processor 320 is specifically configured to:

control the transceiver 310 to obtain a flag bit in the audio file, where the flag bit includes a first flag bit or a second flag bit; and

when the flag bit in the audio file is the first flag bit, play the audio file according to the play probability of the audio file.

Optionally, the processor 320 is specifically configured to:

when a third audio file is played, update the first flag bit in the third audio file to the second flag bit.

For related descriptions of FIG. 11, refer to related descriptions and effects in the method part in FIG. 1 for understanding. Details are not described herein again.

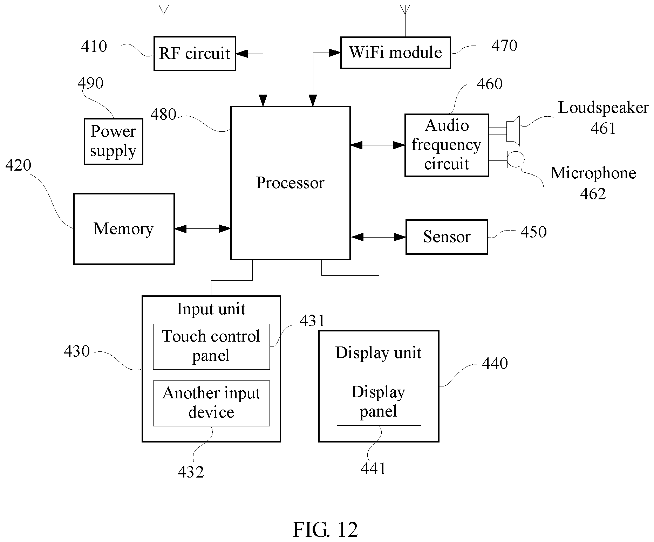

An embodiment of the present invention further provides another audio play apparatus, as shown in FIG. 12. For ease of description, only parts related to this embodiment of the present invention are shown. For specific technical details that are not disclosed, refer to method parts of the embodiments of the present invention. The audio play apparatus may be any terminal device, including a mobile phone, a tablet computer, a personal digital assistant (English full name: Personal Digital Assistant, PDA for short), a point of sale (English full name: Point of Sale, POS for short), an in-vehicle computer, and the like. An example in which the audio play apparatus is a mobile phone is used.

FIG. 12 shows a block diagram of a partial structure of the mobile phone related to the audio play apparatus provided in this embodiment of the present invention. Referring to FIG. 12, the mobile phone includes parts such as a radio frequency (English full name: Radio Frequency, RF for short) circuit 410, a memory 420, an input unit 430, a display unit 440, a sensor 450, an audio frequency circuit 460, a wireless fidelity (English full name: wireless fidelity, WiFi for short) module 470, a processor 480, and a power supply 490. Persons skilled in the art may understand that the mobile phone structure shown in FIG. 12 does not constitute any limitation on a mobile phone, and the mobile phone may include parts more or fewer than those shown in the figure, or a combination of some parts, or parts disposed differently.

The following specifically describes each constituent part of the mobile phone with reference to FIG. 12.

The RF circuit 410 may be configured to receive and send signals during information receiving and sending or during a call, and particularly, to receive downlink information from a base station and send the downlink information to the processor 480 for processing. In addition, the RF circuit 410 sends uplink data to the base station. Generally, the RF circuit 410 includes but is not limited to an antenna, at least one amplifier, a transceiver, a coupler, a low noise amplifier (English full name: Low Noise Amplifier, LNA for short), a duplexer, or the like. In addition, the RF circuit 410 may further communicate with a network and another device by means of wireless communication. For the wireless communication, any communications standard or protocol may be used, including but not limited to global system for mobile communication (English full name: Global System for Mobile communication, GSM for short), general packet radio service (English full name: General Packet Radio Service, GPRS), code division multiple access (English full name: Code Division Multiple Access, CDMA for short), wideband code division multiple Access (English full name: Wideband Code Division Multiple Access, WCDMA for short), long term evolution (English full name: Long Term Evolution, LTE for short), email, short message service (English full name: Short Messaging Service, SMS), and the like.

The memory 420 may be configured to store a software program and module. The processor 480 executes various function applications of the mobile phone and data processing by running the software program and module stored in the memory 420. The memory 420 may mainly include a program storage area and a data storage area. The program storage area may store an operating system, an application program required by at least one function (for example, a voice play function and a picture play function), and the like. The data storage area may store data (for example, audio data and a phone book) and the like created according to use of the mobile phone. In addition, the memory 420 may include a high-speed random access memory, and may further include a nonvolatile memory, such as at least one magnetic disk storage device, a flash memory device, or another volatile solid-state storage device.

The input unit 430 may be configured to: receive input digital or character information, and generate key signal input that is related to user setting and function control of the mobile phone. Specifically, the input unit 430 may include a touch control panel 431 and another input device 432. The touch control panel 431, also referred to as a touch screen, can collect a touch operation (for example, an operation performed by a user on the touch control panel 431 or near the touch control panel 431 by using a finger, a stylus, or any other suitable object or accessory) performed by the user on or near the touch control panel 431, and drive a corresponding connection apparatus according to a preset program. Optionally, the touch control panel 431 may include two parts: a touch detection apparatus and a touch controller. The touch detection apparatus detects a location touched by the user, detects a signal resulting from a touch operation, and transmits the signal to the touch controller. The touch controller receives touch information from the touch detection apparatus, converts the touch information into touch point coordinates, and sends the touch point coordinates to the processor 480. In addition, the touch controller can receive and execute a command sent by the processor 480. In addition, the touch control panel 431 may be implemented in multiple types, such as a resistive type, a capacitive type, an infrared type, and a surface acoustic wave type. In addition to the touch control panel 431, the input unit 430 may further include the another input device 432. Specifically, the another input device 432 may include but is not limited to one or more of a physical keyboard, a function key (for example, a volume control key or an on-off key), a trackball, a mouse, a joystick, or the like.

The display unit 440 may be configured to display information that is input by the user or information provided for the user, and various menus of the mobile phone. The display unit 440 may include a display panel 441. Optionally, the display panel 441 may be configured in a form of a liquid crystal display (English full name: Liquid Crystal Display, LCD for short), an organic light-emitting diode (English full name: Organic Light-Emitting Diode, OLED for short), or the like. Further, the touch control panel 431 may cover the display panel 441. After detecting a touch operation on or near the touch control panel 431, the touch control panel 431 transmits the touch operation to the processor 480 to determine a type of a touch event. Then, the processor 480 provides corresponding visual output on the display panel 441 according to the type of the touch event. In FIG. 12, the touch control panel 431 and the display panel 441 are used as two independent parts to implement input and output functions of the mobile phone. However, in some embodiments, the touch control panel 431 and the display panel 441 may be integrated to implement the input and output functions of the mobile phone.

The mobile phone may further include at least one sensor 450, such as an optical sensor, a motion sensor, or another sensor. Specifically, the optical sensor may include an ambient light sensor and a proximity sensor. The ambient light sensor can adjust brightness of the display panel 441 according to intensity of ambient light. The proximity sensor can turn off the display panel 441 and/or backlight when the mobile phone moves close to an ear. As a type of motion sensor, an accelerometer sensor can detect magnitudes of acceleration in various directions (generally three axes), can detect, in a still state, a magnitude and a direction of gravity, and may be used for an application that identifies a mobile phone posture (for example, screen switch between a portrait mode and a landscape mode, a related game, or magnetometer posture calibration), a vibration identification-related function (for example, a pedometer or tapping), and the like. For other sensors that may further be configured in the mobile phone, such as a gyroscope, a barometer, a hygrometer, a thermometer, and an infrared sensor, details are not described herein.

The audio frequency circuit 460, a loudspeaker 461, and a microphone 462 can provide an audio interface between the user and the mobile phone. The audio frequency circuit 460 may transmit, to the loudspeaker 461, an electrical signal converted from received audio frequency data. The loudspeaker 461 converts the electrical signal into an audio signal and outputs the audio signal. In addition, the microphone 462 converts a collected audio signal into an electrical signal, and the audio frequency circuit 460 receives the electrical signal, converts the electrical signal into audio frequency data, and outputs the audio frequency data to the processor 480 for processing. After the processor 480 processes the audio frequency data, the audio frequency data is sent to, for example, another mobile phone by means of the RF circuit 410, or the audio frequency data is output to the memory 420 for further processing.

WiFi belongs to a short-distance wireless transmission technology. The mobile phone can help, by using the WiFi module 470, the user receive and send an email, browse a webpage, access streaming media, and the like. The WiFi module 470 provides the user with wireless broadband access to the Internet. Although FIG. 12 shows the WiFi module 470, it can be understood that the WiFi module 470 does not belong to necessary constituents of the mobile phone and definitely may be omitted according to a requirement without changing the essence of the present invention.

The processor 480 is a control center of the mobile phone. The processor 480 uses various interfaces and lines to connect all parts of the entire mobile phone, and executes various functions of the mobile phone and processes data by running or executing the software program and/or module stored in the memory 420 and by invoking data stored in the memory 420, so as to perform overall monitoring on the mobile phone. Optionally, the processor 480 may include one or more processing units. Preferably, the processor 480 may integrate an application processor and a modem processor. The application processor mainly processes an operating system, a user interface, an application program, and the like. The modem processor mainly processes wireless communication. It can be understood that the modem processor may alternatively not be integrated into the processor 480.

The mobile phone further includes the power supply 490 (for example, a battery) that supplies electricity to all the parts. Preferably, the power supply may be logically connected to the processor 480 by using a power management system, so as to implement functions such as charge management, discharge management, and power consumption management by using the power management system.

The mobile phone may further include a camera, a Bluetooth module, and the like, although this is not shown. Details are not described herein.

In this embodiment of the present invention, the processor 480 included in the terminal further has the following functions:

    controlling the input unit 430 to obtain identification information corresponding to an audio file;
    determining a play probability of the audio file according to the identification information corresponding to the audio file; and

    playing the audio file according to the play probability of the audio file.

A play mode of the audio play apparatus is a random play mode.

The identification information includes an identifier value and a quantity of identifiers.

The processor 480 is specifically further configured to:

    play a to-be-played audio file set constituted by at least one audio file;
    determine an average play probability of the audio file according to a total quantity of identifiers in the to-be-played audio file set; and
    determine the play probability of the audio file in the to-be-played audio file set according to the quantity of identifiers of the audio file and the average play probability.

The processor 480 is specifically further configured to:

    play a to-be-played audio file set constituted by at least one audio file;
    determine an average play probability of the audio file according to a total quantity of identifiers in the to-be-played audio file set;
    determine a first play probability according to a quantity of identifiers in identification information of a first audio file, and determine a second play probability according to a quantity of identifiers in identification information of a second audio file, where both the first audio file and the second audio file are audio files in the to-be-played audio file set, the quantity of identifiers in the identification information of the first audio file is greater than or equal to 2, and the quantity of identifiers in the identification information of the second audio file is greater than the quantity of identifiers in the identification information of the first audio file;
    determine a play probability sum of the audio file in the to-be-played audio file set according to the average play probability, the first play probability, and the second play probability;
    control, according to the average play probability and the play probability sum, the input unit 430 to obtain a target random probability; and
    determine the play probability of the audio file in the to-be-played audio file set according to the target random probability.

The processor 480 is specifically further configured to:
calculate the play probability sum of the audio file in the to-be-played audio file set in the following manner:

$$SUM = 1/n + a + b,$$

where SUM represents the play probability sum of the audio file in the to-be-played audio file set, 1/n represents the average play probability, a represents the first play probability of the first audio file, and b represents the second play probability of the second audio file.

The processor 480 is specifically further configured to:

randomly obtain the target random probability according to the following range:

$$1/n \leq k \leq SUM,$$

where 1/n represents the average play probability, SUM represents the play probability sum of the audio file in the to-be-played audio file set, and k represents the target random probability.

The processor 480 is specifically further configured to:

when k=1/n, select an audio file whose play probability is the average play probability, to play the audio file;
when 1/n<k≤(1/n+a), select the first audio file whose play probability is the first play probability, to play the first audio file; or
when (1/n+a)<k≤SUM, select the second audio file whose play probability is the second play probability, to play the second audio file.

The processor 480 is specifically further configured to:

control the input unit 430 to obtain a flag bit in the audio file, where the flag bit includes a first flag bit or a second flag bit; and
when the flag bit in the audio file is the first flag bit, play the audio file according to the play probability of the audio file.

The processor 480 is specifically further configured to:

when a third audio file is played, update the first flag bit in the third audio file to the second flag bit.

It can be clearly understood by persons skilled in the art that, for ease and brevity of description, for detailed working processes of the foregoing system, apparatuses, and units, reference may be made to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, multiple units or components may be combined or may be integrated into another system, or some features may be ignored or not performed. In addition, the displayed or discussed mutual couplings, direct couplings, or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on multiple network units. Some or all of the units may be selected according to an actual requirement, to achieve the objectives of the solutions in the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and is sold or used as an independent product, the integrated unit may be stored in a computer readable storage medium. Based on such an understanding, the technical solutions of the present invention essentially, or the part contributing to the prior art, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes various mediums that can store program code, such as a USB flash drive, a removable hard disk, a read-only memory (English full name: Read-Only Memory, ROM for short), a random access memory (English full name: Random Access Memory, RAM for short), a magnetic disk, or an optical disc.

The foregoing embodiments are merely intended to describe the technical solutions of the present invention, but are not intended to limit the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. An audio file play control method, comprising:

    obtaining, by an audio play apparatus, identification information corresponding to an audio file;
    determining, by the audio play apparatus, a play probability of the audio file according to the identification information corresponding to the audio file; and
    playing, by the audio play apparatus, the audio file according to the play probability of the audio file.

2. The method according to claim 1, wherein a play mode of the audio play apparatus is a random play mode.

3. The method according to claim 2, wherein the identification information comprises an identifier value and a quantity of identifiers.

4. The method according to any one of claims 1 to 3, wherein the determining, by the audio play apparatus, a play probability of the audio file according to the identification information corresponding to the audio file comprises:

    playing, by the audio play apparatus, a to-be-played audio file set constituted by at least one audio file;
    determining, by the audio play apparatus, an average play probability of the audio file according to a total quantity of identifiers in the to-be-played audio file set; and
    determining, by the audio play apparatus, the play probability of the audio file in the to-be-played audio file set according to the quantity of identifiers of the audio file and the average play probability.

5. The method according to any one of claims 1 to 3, wherein the determining, by the audio play apparatus, a play probability of the audio file according to the identification information corresponding to the audio file comprises:

    playing, by the audio play apparatus, a to-be-played audio file set constituted by at least one audio file;
    determining, by the audio play apparatus, an average play probability of the audio file according to a total quantity of identifiers in the to-be-played audio file set;
    determining, by the audio play apparatus, a first play probability according to a quantity of identifiers in identification information of a first audio file, and determining a second play probability according to a quantity of identifiers in identification information of a second audio file, wherein both the first audio file and the second audio file are audio files in the to-be-played audio file set, the quantity of identifiers in the identification information of the first audio file is greater than or equal to 2, and the quantity of identifiers in the identification information of the second audio file is greater than the quantity of identifiers in the identification information of the first audio file;
    determining, by the audio play apparatus, a play probability sum of the audio file in the to-be-played audio file set according to the average play probability, the first play probability, and the second play probability;
    obtaining, by the audio play apparatus, a target random probability according to the average play probability and the play probability sum; and
    determining, by the audio play apparatus, the play probability of the audio file in the to-be-played audio file set according to the target random probability.

6. The method according to claim 5, wherein the determining, by the audio play apparatus, a play probability sum of the audio file in the to-be-played audio file set according to the average play probability, the first play probability, and the second play probability comprises:

    calculating, by the audio play apparatus, the play probability sum of the audio file in the to-be-played audio file set in the following manner:

    $$SUM = 1/n + a + b,$$

    wherein SUM represents the play probability sum of the audio file in the to-be-played audio file set, 1/n represents the average play probability, a represents the first play probability of the first audio file, and b represents the second play probability of the second audio file.

7. The method according to claim 6, wherein the obtaining, by the audio play apparatus, a target random probability according to the average play probability and the play probability sum comprises:

    randomly obtaining, by the audio play apparatus, the target random probability according to the following range:

    $$1/n \leq k \leq SUM,$$

wherein 1/n represents the average play probability, SUM represents the play probability sum of the audio file in the to-be-played audio file set, and k represents the target random probability.

8. The method according to claim 7, wherein the playing, by the audio play apparatus, the audio file according to the play probability of the audio file comprises:

when k=1/n, selecting, by the audio play apparatus, an audio file whose play probability is the average play probability, to play the audio file;
when 1/n<k<(1/n+a), selecting, by the audio play apparatus, the first audio file whose play probability is the first play probability, to play the first audio file; or
when (1/n+a)<k≤SUM, selecting, by the audio play apparatus, the second audio file whose play probability is the second play probability, to play the second audio file.

9. The method according to any one of claims 1 to 8, wherein before the obtaining, by an audio play apparatus, identification information corresponding to an audio file, the method further comprises:

obtaining, by the audio play apparatus, a flag bit in the audio file, wherein the flag bit comprises a first flag bit or a second flag bit; and
the playing, by the audio play apparatus, the audio file according to the play probability of the audio file comprises:

when the flag bit in the audio file is the first flag bit, playing, by the audio play apparatus, the audio file according to the play probability of the audio file.

10. The method according to claim 9, wherein the method further comprises:

when a third audio file is played, updating, by the audio play apparatus, the first flag bit in the third audio file to the second flag bit.

11. An audio play apparatus, comprising:

an obtaining module, configured to obtain identification information corresponding to an audio file;
a determining module, configured to determine a play probability of the audio file according to the identification information, obtained by the obtaining module, corresponding to the audio file; and
a play module, configured to play the audio file according to the play probability, determined by the determining module, of the audio file.

12. The audio play apparatus according to claim 11, wherein a play mode of the audio play apparatus is a random play mode.

13. The audio play apparatus according to claim 12, wherein the identification information comprises an identifier value and a quantity of identifiers.

14. The audio play apparatus according to any one of claims 11 to 13, wherein the determining module comprises:

a first play unit, configured to play a to-be-played audio file set constituted by at least one audio file;
a first determining unit, configured to determine an average play probability of the audio file according to a total quantity of identifiers in the to-be-played audio file set played by the first play unit; and
a second determining unit, configured to determine the play probability of the audio file in the to-be-played audio file set according to the quantity of identifiers of the audio file and the average play probability that is determined by the first determining unit.

15. The audio play apparatus according to any one of claims 11 to 13, wherein the determining module comprises:

a second play unit, configured to play a to-be-played audio file set constituted by at least one audio file;
a third determining unit, configured to determine an average play probability of the audio file according to a total quantity of identifiers in the to-be-played audio file set played by the second play unit;
a fourth determining unit, configured to determine a first play probability according to a quantity of identifiers in identification information of a first audio file, and determine a second play probability according to a quantity of identifiers in identification information of a second audio file, wherein both the first audio file and the second audio file are audio files in the to-be-played audio file set, the quantity of identifiers in the identification information of the first audio file is greater than or equal to 2, and the quantity of identifiers in the identification information of the second audio file is greater than the quantity of identifiers in the identification information of the first audio file;
a fifth determining unit, configured to determine a play probability sum of the audio file in the to-be-played audio file set according to the average play probability determined by the third determining unit and the first play probability and the second play probability that are determined by the fourth determining unit;
an obtaining unit, configured to obtain a target random probability according to the average play probability determined by the third determining unit and the play probability sum determined by the fifth determining unit; and
a sixth determining unit, configured to determine the play probability of the audio file in the to-be-played audio file set according to the target random probability obtained by the obtaining unit.

16. The audio play apparatus according to claim 15, wherein the fifth determining unit comprises:

a calculation subunit, configured to calculate the play probability sum of the audio file in the to-be-played audio file set in the following manner:

$$SUM = 1/n + a + b,$$

wherein SUM represents the play probability sum of the audio file in the to-be-played audio file set, 1/n represents the average play probability, a represents the first play probability of the first audio file, and b represents the second play probability of the second audio file.

17. The audio play apparatus according to claim 16, wherein the obtaining unit comprises:

an obtaining subunit, configured to randomly obtain the target random probability according to the following range:

$$1/n \leq k \leq SUM,$$

wherein 1/n represents the average play probability, SUM represents the play probability sum of the audio file in the to-be-played audio file set, and k represents the target random probability.

18. The audio play apparatus according to claim 17, wherein the play module comprises:

a first selection unit, configured to: when k=1/n, select an audio file whose play probability is the average play probability, to play the audio file;
a second selection unit, configured to: when $1/n < k \leq (1/n+a)$, select the first audio file whose play probability is the first play probability, to play the first audio file; and

a third selection unit, configured to: when $(1/n+a) < k \leq SUM$, select the second audio file whose play probability is the second play probability, to play the second audio file.

19. The audio play apparatus according to any one of claims 11 to 18, wherein the audio play apparatus further comprises:

an identifier obtaining module, configured to obtain a flag bit in the audio file, wherein the flag bit comprises a first flag bit or a second flag bit; and
the play module comprises:

a third play unit, configured to play the audio file according to the play probability of the audio file when the flag bit in the audio file is the first flag bit.

20. The audio play apparatus according to claim 19, wherein the audio play apparatus further comprises:

an update module, configured to: when a third audio file is played, update the first flag bit in the third audio file to the second flag bit.

21. An audio play apparatus, comprising a memory, a transceiver, a processor, and a bus system, wherein the memory is configured to store a program;
the processor is configured to execute the program in the memory, to specifically implement the following steps:

controlling the transceiver to obtain identification information corresponding to an audio file;
determining a play probability of the audio file according to the identification information corresponding to the audio file; and
playing the audio file according to the play probability of the audio file; and
the bus system is configured to connect the memory, the transceiver, and the processor, so that the memory, the transceiver, and the processor communicate.

An audio play apparatus obtains identification information corresponding to an audio file — 101

The audio play apparatus determines a play probability of the audio file according to the identification information corresponding to the audio file — 102

The audio play apparatus plays the audio file according to the play probability of the audio file — 103

FIG. 1

Bubble

FIG. 2

20

Audio play apparatus

| 201 | 202 | 203 |
|---|---|---|
| Obtaining module | Determining module | Play module |

FIG. 3

20

Audio play apparatus

201                    202

Obtaining module            First play unit            2021A

First determining unit            2021B

203                    Second determining unit            2021C

Play module

Determining module

FIG. 4

FIG. 5

20

Audio play apparatus

202

2022A

2022B

201

Second
play unit

Third
determining unit

20221

Calculation
subunit

2022D

203

Fourth
determining unit

2022C

Fifth determining
unit

Obtaining
module

Play
module

Sixth
determining unit

Obtaining unit

2022F

Determining module

2022E

FIG. 6

FIG. 7

EP 3 441 972 A1

Audio play apparatus — 20

Obtaining module — 201

Second play unit — 2022A

Third determining unit — 2022B

20221

2022D

First selection unit — 2031

Fourth determining unit — 2022C

Calculation subunit

Fifth determining unit

Second selection unit — 2032

Third selection unit — 2033

Sixth determining unit — 2022F

Obtaining subunit

Obtaining unit — 2022E

20222

Play module — 203

Determining module — 202

FIG. 8

FIG. 9

EP 3 441 972 A1

FIG. 10

30

Transceiver
310

Processor
320

340

Memory
330

FIG. 11

FIG. 12

| | INTERNATIONAL SEARCH REPORT | International application No. |
|---|---|---|
| | | PCT/CN2016/080234 |

**A. CLASSIFICATION OF SUBJECT MATTER**

G11B 27/10 (2006.01) i

According to International Patent Classification (IPC) or to both national classification and IPC

**B. FIELDS SEARCHED**

Minimum documentation searched (classification system followed by classification symbols)

G11B

Documentation searched other than minimum documentation to the extent that such documents are included in the fields searched

Electronic data base consulted during the international search (name of data base and, where practicable, search terms used)

CNTXT, CNKI, VEN: random, music, probability, play, audio, song, user preference, identification, list, control, probabilities

**C. DOCUMENTS CONSIDERED TO BE RELEVANT**

| Category* | Citation of document, with indication, where appropriate, of the relevant passages | Relevant to claim No. |
|---|---|---|
| X | US 20060288845 A1 (GALE) 28 December 2006 (28.12.2006) description, paragraphs [0027]-[0046], and figures 1 and 6-8 | 1-4, 9-14, 19-21 |
| X | CN 104835516 A (XIAOMI TECHNOLOGY CO., LTD.) 12 August 2015 (12.08.2015) description, paragraphs [0045]-[0077], [0088] and [0089], and figures 1-4 | 1-4, 9-14, 19-21 |
| X | CN 104851439 A (HUIZHOU TCL MOBILE COMMUNICATION CO., LTD.) 19 August 2015 (19.08.2015) description, paragraphs [0052]-[0063] | 1, 2, 11, 12, 21 |
| A | JP 2001176252 A (PIONEER ELECTRONIC CORP.) 29 June 2001 (29.06.2001) the whole document | 1-21 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 December 2016 | 11 January 2017 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer DAI, Huiying Telephone No. (86-10) 62411475 |
|---|---|

Form PCT/ISA /210 (second sheet) (July 2009)

## INTERNATIONAL SEARCH REPORT
Information on patent family members

International application No.

PCT/CN2016/080234

| Patent Documents referred in the Report | Publication Date | Patent Family | Publication Date |
|---|---|---|---|
| US 20060288845 A1 | 28 December 2006 | None | |
| CN 104835516 A | 12 August 2015 | None | |
| CN 104851439 A | 19 August 2015 | None | |
| JP 2001176252 A | 29 June 2001 | None | |

Form PCT/ISA /210 (patent family annex) (July 2009)